(19) Europäisches Patentamt / European Patent Office / Office européen des brevets

(11) **EP 1 882 623 B1**

(12) **EUROPEAN PATENT SPECIFICATION**

(45) Date of publication and mention
of the grant of the patent:
**03.11.2010 Bulletin 2010/44**

(51) Int Cl.:
**B62D 5/04** (2006.01)

(21) Application number: **07014447.2**

(22) Date of filing: **23.07.2007**

(54) **Electric Power steering apparatus**

Elektrische Servolenkung

Dispositif de direction d'alimentation électrique

(84) Designated Contracting States:
**DE FR**

(30) Priority: 25.07.2006 JP 2006202488
12.01.2007 JP 2007003996
17.01.2007 JP 2007008072

(43) Date of publication of application:
**30.01.2008 Bulletin 2008/05**

(73) Proprietor: **NSK Ltd.**
**Tokyo 141-8560 (JP)**

(72) Inventors:
• **Aoki, Yuho, c/o NSK Ltd.**
**Maebashi-shi Gunma 371-8527 (JP)**
• **Hara, Takeshi, c/o NSK Ltd.**
**Maebashi-shi Gunma 371-8527 (JP)**
• **Kobayashi, Hideyuki, c/o NSK Ltd.**
**Maebashi-shi Gunma 371-8527 (JP)**
• **Endo, Shuji, c/o NSK Ltd.**
**Maebashi-shi Gunma 371-8527 (JP)**
• **Furushima, Nobuhiro, c/o NSK Ltd.**
**Maebashi-shi Gunma 371-8527 (JP)**

(74) Representative: **Grünecker, Kinkeldey,**
**Stockmair & Schwanhäusser**
**Anwaltssozietät**
**Leopoldstrasse 4**
**80802 München (DE)**

(56) References cited:
JP-A- 3 104 778  JP-A- 2003 205 846
JP-A- 2003 285 758  JP-A- 2005 119 417
US-A- 4 591 014  US-A- 4 945 298
US-A- 5 086 859  US-A1- 2003 042 067

EP 1 882 623 B1

## Description

BACKGROUND OF THE INVENTION

1. Field of the Invention

This invention relates to an electric power steering device designed to assist steering by controlling the drive of a steering assistant motor on the basis of steering torque due to steering of a steering wheel thereby to transmit the rotating force of the motor to a steering mechanism.

2. Description of Related Art

[First problem]

In such an electric power steering apparatus which gives the steering assistant force generated by the electric motor to the steering mechanism having the universal joint in the torque transmitting system, a torque fluctuation due to the universal joint is generated. In order to restrict the torque fluctuation, there is a known electric power steering apparatus which acquires a correction coefficient corresponding to the steering angle of a steering shaft, computes a correction motor current command value on the basis of the correction coefficient and a motor current command value determined according to steering torque, and supplies a driving signal to the driving circuit of a steering assistant motor on the basis of the correction motor current command value thus computed, thereby reducing the torque fluctuation due to the universal joint. For example, see Japanese Patent Unexamined Publication JP-A-2003-205846 which discloses an electric power steering apparatus according to the preamble of claim 1.

In the prior art described in the JP-A-2003-205846, however, in acquiring the motor current on the basis of the steering torque, the torque is set so as to be adapted to a certain joint angle (crossing angle) . So, as the case may be, the prior art cannot cope with changes in the joint angle (crossing angle) by an electric or manual tilting mechanism. Concretely, within a rack thrust range in which the motor current is not higher than a maximum thrust, since the motor is feedback-controlled on the basis of the detected output from a torque sensor and the motor current value is corrected using the correction coefficient acquired so as to correspond to the steering angle or tilting angle, changes in a manual input by steering of a driver do not occur. However, if changes in the joint angle (crossing angle) cannot be detected or a necessary rack thrust exceeds the maximum thrust of the motor, because of shortage of thrust, changes in a manual input by steering of the driver occurs. Further, in the vicinity of a rack end, owing to a torque fluctuation of a joint, the thrust exceeding the maximum rack thrust Fmax of the electric power steering apparatus may be applied to the rack. Namely, in recent years, since the high output of the motor is implemented with up-sizing of the vehicle equipped with the electric power steering apparatus, the strength of the rack is designed in the vicinity of the limit. Thus, an increase in the thrust due to changes in the torque greatly influences the strength of the torque transmitting member of the electric power steering apparatus inclusive of the rack. This problem has not been yet solved.

[Second problem]

Further, in the JP-A-2003-205846, with up-sizing of a vehicle equipped with an electric power steering apparatus (EPS) and high output of the motor, there has been proposed the electric power steering apparatus (EPC) which detects steering torque due to steering of a steering wheel and also detects a steering angle or a tilt angle, computes a motor current value on the basis of the steering torque detected and computes a correction coefficient corresponding to the steering angle or tilt angle detected, corrects the motor current value by the correction coefficient to compute a corrected motor current value, and controls the drive of the motor according to the corrected motor current value, thereby attenuating changes in torque by a universal joint (see Patent Reference 1).

In the related art, in acquiring the motor current on the basis of the steering torque, the torque is set so as to be adapted to a certain cardan universal joint angle (crossing angle). So, as the case may be, the related art cannot cope with changes in the joint angle (crossing angle) by an electric or manual tilting mechanism.

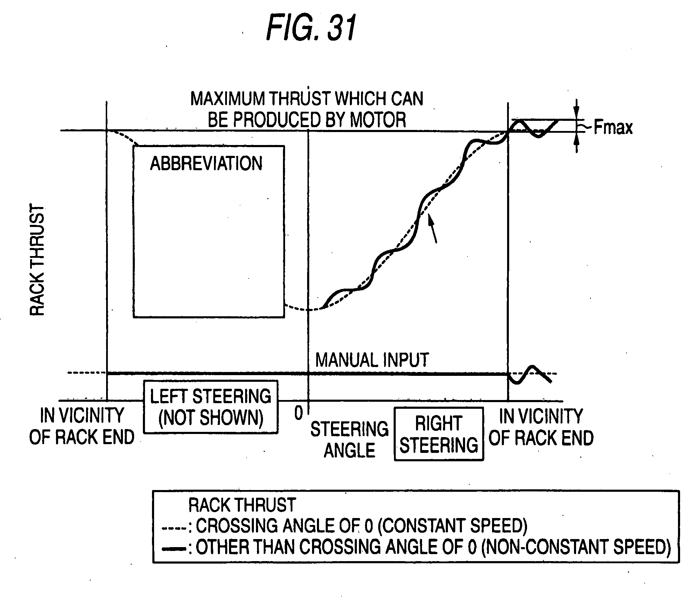

Concretely, as seen from Fig. 31, within a rack thrust range in which the motor current gives the rack not higher than a maximum thrust, since the motor is feedback-controlled on the basis of the detected output from a sensor such as a torque sensor and the motor current value is corrected using the correction coefficient acquired so as to correspond to the steering angle or tilt angle, changes in a manual input by steering of a driver do not occur. However, if a necessary rack thrust exceeds the maximum thrust of the motor, because of shortage of thrust, changes in the manual input by steering of the driver occurs. Further, as seen from Fig. 31, in the vicinity of a rack end, owing to a torque fluctuation of a joint, the thrust exceeding the maximum rack thrust Fmax of the electric power steering apparatus may be applied to the rack. Namely, in recent years, since the high output of the motor is implemented with up-sizing of the vehicle equipped with EPS, the strength of the rack is designed in the vicinity of the limit. Thus, an increase in the thrust due to the torque fluctuation greatly influences the strength of the torque transmitting member of the electric power steering apparatus inclusive of the rack.

SUMMARY OF THE INVENTION

In view of the first problem, one obj ect of this invention is to provide an electric power steering apparatus which can detect a torque fluctuation due to changes in a joint angle (crossing angle) and control the motor so as to cancel the torque fluctuation.

Further, in view of the second problem, another object of this invention is to make torque control according to a torque fluctuation due to changes in a cardan universal joint angle.

In order to attain the above objects, according to a first aspect of the invention, there is provided an electric power steering apparatus, including:

a steering mechanism having a universal joint in a torque transmitting system and steering a steered wheel;
a steering torque detecting unit that detects steering torque supplied to the steering mechanism;
a current command value computing unit that computes a current command value on the basis of at least the steering torque detected by the steering torque detecting unit;
an electric motor that generates steering assistant torque to be supplied to the steering mechanism;
a motor control unit that drives/controls the electric motor;
a steering angle detecting unit that detects steering angle in the steering mechanism;
a torque fluctuation detecting unit that detects a torque fluctuation due to crossing angle in the universal joint on the basis of the steering angle detected by the steering angle detecting unit and any one of the steering torque detected by the steering torque detecting unit, the current command value and self-aligning torque; and
a current command value correcting unit that corrects the current command value on the basis of the torque fluctuation detected by the torque fluctuation detecting unit and the steering angle detected by the steering angle detecting unit.

According to a second aspect of the invention, as set forth in the first aspect of the invention, it is preferable that the current command correcting unit computes a current command correction value on the basis of the torque fluctuation detected by the torque fluctuation detecting unit and the steering angle detected by the steering angle detecting unit.

According to a third aspect of the invention, as set forth in the first aspect of the invention, it is preferable that the current command correcting unit limits the current command value on the basis of the torque fluctuation detected by the torque fluctuation detecting unit and the steering angle detected by the steering angle detecting unit so that maximum torque due to the torque fluctuation is not larger than permissible maximum torque in the torque transmitting system of the steering mechanism.

According to a fourth aspect of the invention, as set forth in the first aspect of the invention, it is preferable that the torque fluctuation detecting unit detects amplitude and phase of a torque fluctuation within a predetermined range of the steering angle and the current command value correcting unit computes the current command correction value on the basis of the steering angle and the amplitude and phase of the torque changing rate.

According to a fifth aspect of the invention, as set forth in the second aspect of the invention, it is preferable that the current command value correcting unit adds the current command correction value computed to the current command value.

According to a sixth aspect of the invention, as set forth in the third aspect of the invention, it is preferable that if the torque changing point for the steering angle is known in advance, the torque fluctuation detecting unit detects the direction of the torque fluctuation and the current command correcting unit computes the current command limited value on the basis of the direction of the torque fluctuation and the steering angle.

In accordance with the first through sixth aspects of this invention, the torque fluctuation due to changes in the tilting angle of the steering shaft is detected on the basis of the steering angle and any one of the steering torque, current command value and self-aligning torque and the current correction value is correspondingly computed. For this reason, without detecting the tilting angle, changes in a manual input by steering of a driver can be reduced.

Further, the steering assistant force generated in the electric motor can be effectively used to the utmost while surely preventing the thrust exceeding the maximum permissible torque in the electric power steering apparatus from being supplied to the torque transmitting system.

BRIEF DESCRIPTION OF THE DRAWINGS

Fig. 1 is a view showing the schematic of the electric power steering apparatus according to a first embodiment of this invention;

Fig. 2 is a partially-cut front view partially showing the concrete configuration of a steering gear;

Fig. 3 is a block diagram of a concrete example of the controller according to this invention;

Fig. 4 is a characteristic curve graph of a steering assistant torque command value computing map showing a relationship between a steering torque a steering assistant torque command value with a vehicle speed as a parameter;

Fig. 5 is a schematic view for explaining self-aligning torque;

Fig. 6 is a schematic view of universal joints;

Fig. 7 is a schematic structural view of a tilting mechanism;

Fig. 8 is a structural view of a universal joint;

Fig. 9 is a characteristic curve graph showing the ratio of an angular speed to the rotating angle of the universal joint;

Fig. 10 is a characteristic curve graph showing the relationship between a steering angle and a steering torque;

Fig. 11 is a characteristic curve graph showing the relationship between a steering angle and a torque changing rate dT/dθ for the steering angle;

Fig. 12 is a block diagram showing the concrete configuration of a current correcting unit;

Fig. 13 is a block diagram showing the concrete configuration of a current correcting unit according to a second embodiment of this invention;

Fig. 14 is a characteristic curve graph showing a current limiting characteristic;

Fig. 15 is a block diagram showing the concrete configuration of a current correcting unit according to a modification of the second embodiment;

Fig. 16 is a graph for explaining the sign of a crossing angle $\alpha$ and a current limiting characteristic;

Fig. 17 is a flowchart showing an example of a steering assistant control processing procedure executed by a microcomputer;

Fig. 18 is a flowchart showing an example of a current correcting processing procedure executed by a microcomputer;

Fig. 19 is a block diagram showing an embodiment applied to a brushless motor;

Fig. 20 is a block diagram of the electric power steering apparatus according to a further example;

Fig. 21 is a view for explaining the structure of a universal joint;

Fig. 22 is a view for explaining the structure of a waist shaking tilt column;

Fig. 23 is a perspective view of a cardan universal joint;

Fig. 24 is a waveform chart for explaining the angular speed ratio of an output shaft to an input shaft of the cardan universal joint;

Fig. 25 is a waveform chart for explaining the relationship between a rack thrust and a manual input in the vicinity of a rack end;

Fig. 26 is a waveform chart for explaining the rack thrust and manual input before and after control;

Fig. 27 is a waveform chart for explaining the rack thrust and manual input before and after control;

Fig. 28 is a waveform chart showing the relationship between a motor current and a maximum motor current limiting value;

Fig. 29 is a waveform chart for explaining the rack thrust and manual input before and after control in another example;

Fig. 30 is a waveform chart showing the relationship between a motor current and a maximum motor current limiting value in another example; and

Fig. 31 is a waveform chart for explaining the relationship between a steering angle and a rack thrust in a related art.

## DETAILED DESCRIPTION OF EXEMPLARY EMBODIMENTS OF THE INVENTION EMBODIMENTS

Now referring to the drawings, an explanation will be given of various embodiments of this invention.

[First Embodiment]

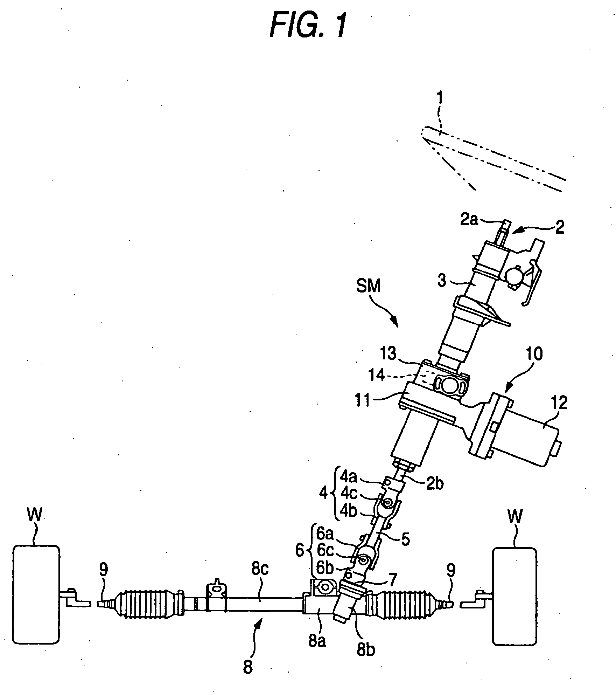

Fig. 1 is a view showing the schematic configuration of the electric power steering apparatus according to the first embodiment of this invention.

In Fig. 1, symbol SM refers to a steering mechanism. This steering mechanism SM is provided with a steering shaft 2 having an input shaft 2a to which the steering force exerted to a steering wheel 1 by a driver is transmitted and an output shaft 2b coupled with the input shaft 2a through a torsion bar not shown. The steering shaft 2 is rotatably mounted within a steering column 3. The one end of the input shaft 2a is connected to the steering wheel 1 and the other end thereof is connected to a torsion bar not shown.

The steering force transmitted to the output shaft 2b is transmitted to an intermediate shaft 5 through a universal joint 4 consisting of two yokes 4a, 4b and a cross coupling segment 4c for coupling them. The steering force is further transmitted to a pinion shaft 7 through a universal joint 6 consisting of two yokes 6a, 6b and a cross coupling segment 6c for coupling them. The steering force transmitted to the pinion shaft 7 is transmitted to right/left tie rod 9 through a steering gear 8. These tie rods 9 steer a steered wheel W.

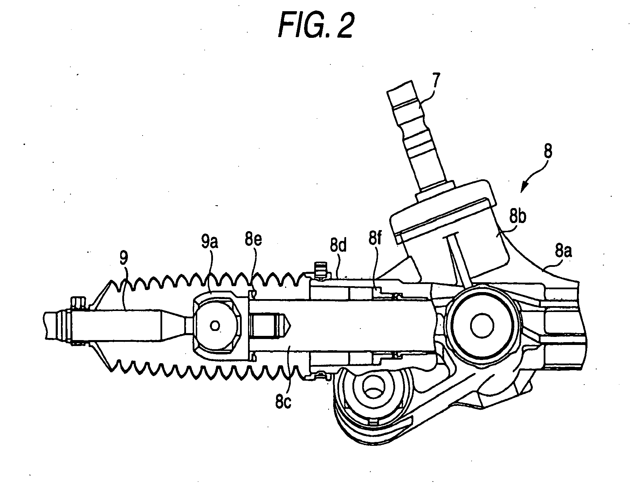

Now, the steering gear 8, as seen from Fig. 2, is constructed of a rack-and-pinion format consisting of a pinion 8b coupled with the pinion shaft 7 and a rack shaft 8c tooth-engaged with the pinion 8b in a gear housing 8a. The steering gear 8 serves to convert the rotary motion transmitted to the pinion 8b into a linear motion by a rack shaft 8c.

The tie rod 9 is connected to both ends of the rack shaft 8c through a ball joint 9a. On the inner wall of a cylindrical segment 8d covering the rack shaft 8c of the gear housing 8a, a stopper member 8f is formed. When the rack shaft 8c reaches a steering marginal position or rack stroke end, a buffer member 8e formed on the inner end face of the ball joint 9a attached to the rack shaft 8c hits the stopper member 8f.

Further, within a housing 13 connected to the steering wheel 1 side of a speed reducer 11, a steering torque sensor 14 is arranged. The steering torque sensor 14 serves to detect the steering torque applied to the steering wheel 1 and transmitted to the input shaft 2a. For example, the steering torque sensor 14 converts the steering torque into a twisting angle change of a torsion bar (not shown) arranged between the input shaft 2a and the output shaft 2b and detects this twisting angle change by a non-contact magnetic sensor.

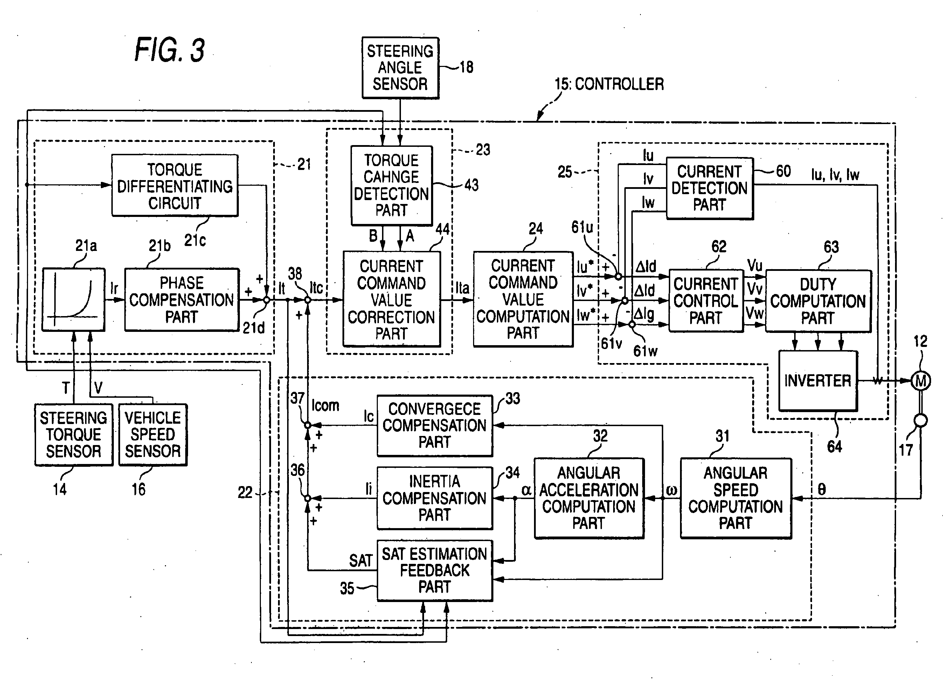

As seen from Fig. 3, a controller 15 receives the detected value T of the steering torque produced from the steering torque sensor 3. In addition to the torque detected value T, the controller 15 also receives the vehicle speed detected value V detected by a vehicle speed sensor 16, motor currents Iu to Iw flowing through an electric motor 12, the rotating angle θm of an electric motor 12 detected by a rotating angle sensor 17 including a resolver, encoder, etc., and a steering angle θ of the steering shaft 2 detected by a steering angle sensor 18. The controller 15 computes a steering assistant torque command value It serving as a current command value which causes the electric motor 12 to produce a steering assistant force corresponding to the torque detected value T and vehicle speed detected value V thus received. The controller 15 further subjects the steering assistant command value It thus computed to various kinds of compensating processing on the basis of a motor angular speed ωm and a motor angular acceleration αm computed from the rotating angle θm and thereafter converts it into its d-q axis command value to be thereafter subjected to two-phase/three-phase conversion, thereby computing three-phase current command values Iu* to Iw*. The controller 15 further feedback-controls the driving current supplied to the electric motor 12 on the basis of the three-phase command values Iu* to Iw* and motor currents Iu to Iw, thereby producing the motor currents Iu, Iv and Iw for driving/controlling the electric motor 12.

Namely, the controller 15, as seen from Fig. 3, includes a torque command value computing unit 21 for computing the steering assistant torque command value It serving as the current command value on the basis of the steering torque T and vehicle speed V; a torque command value compensating unit 22 for compensating for the steering torque assistant torque command value It computed by the torque command value computing unit 21; a current correcting unit 23 for correcting the torque command value Itc compensated by the torque command value compensating unit 22 in order to restrict its torque fluctuation, thereby producing a corrected current command value Ita; a current command value computing unit 24 for computing the d-q axis current command value on the basis of the corrected current command value Ita produced from the current correcting unit 23; and a motor current control unit 25 for creating the motor currents Iu to Iw on the basis of the d-axis current command value Id* and the q-axis current command value Iq* which are produced from the current command value computing unit 24.

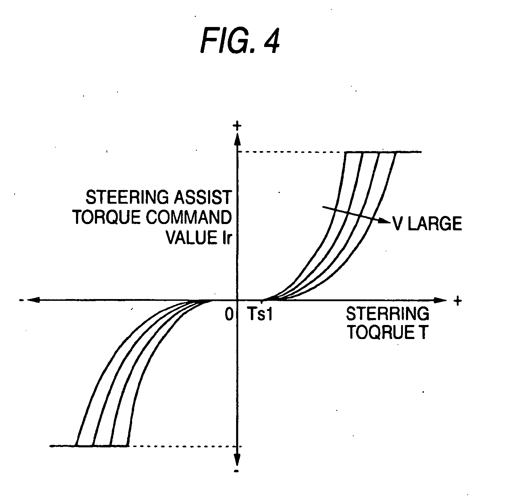

The torque command value computing unit 21 includes a steering torque command value computing unit 21a for computing the steering torque command value Ir as the current command value on the basis of steering torque T and vehicle speed V referring to a steering torque command value computing map as shown in Fig. 4; a phase compensating unit 21b for phase-compensating for the steering torque command value Ir computed by the steering torque command value computing unit 21a; a toque differentiating circuit 21c for differentiating the steering torque T to compute a torque differentiated value which enhances the response of control in the vicinity of a neutral point of the steering mechanism thereby to realize smooth steering; and an adder 21d for adding the phase-compensated output produced from the phase compensating unit 21b to the differentiated output produced from the torque differentiating unit 21c.

The steering assistant torque command value computing map, as seen from Fig. 4, is constructed of a characteristic view represented by a parabolic curve which has a horizontal axis indicative of the steering torque T, a vertical axis indicative of the steering assistant torque command value Ir and a parameter of the vehicle speed V. The characteristic curve is set as follows. While the steering torque T increases from "0" to a preset value Ts1 in its vicinity, the steering assistant torque command value Ir keeps "0". After the steering torque T exceeds the preset value Ts1, first, the steering assistant torque command value It increases relatively gently for an increase in the steering torque T. However, when the steering torque T further increases, the steering assistant torque command value Ir increases abruptly for this increase. In this case, the gradient of the characteristic curve decreases according to an increase in the vehicle speed.

The command value compensating unit 22 includes at least, an angular speed computing unit 31 for differentiating the motor rotating angle θm detected by the rotating angle sensor 17 to compute the motor angular speed ωm; an angular acceleration computing unit 32 for differentiating the motor angular speed ωm computed by the angular speed computing unit 31 to compute the motor angular acceleration $\alpha m$; a convergence compensating unit 33 for compensating the convergence of the yaw rate on the basis of the motor angular speed $\omega m$ computed by the angular speed computing unit 31; an inertia compensating unit 34 for compensating the torque corresponding degree generated due to the inertia of the electric motor 12 on the basis of the motor acceleration $\alpha m$ computed by the angular acceleration computing unit 32, thereby preventing the sense of inertia or control-response from being deteriorated; and a self-aligning torque detecting unit (hereinafter referred to as a SAT detecting unit) 35 for detecting a self-aligning torque (SAT).

Now, the convergence compensating unit 33 receives the vehicle speed V detected by the vehicle speed sensor 16 and the motor angular speed $\omega m$ computed by the angular speed computing unit 31 and multiplies the motor angular speed $\omega m$ by a convergence control gain Kv changed according to the vehicle speed V thereby to compute a convergence compensated value Ic so that the swinging operation of the steering wheel 1 is braked in order to improve the convergence of the yaw rate of the vehicle.

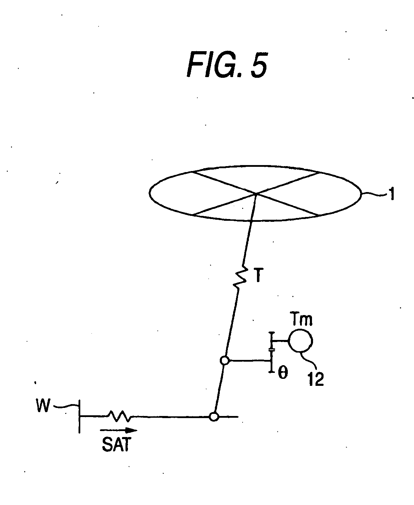

The SAT detecting unit 35 receives the steering torque T, angular speed $\omega m$, angular acceleration $\alpha m$ and steering assistant torque command value It computed by the steering assistant torque command value computing unit 21 and detects the self-aligning torque SAT by computation on the basis of these values. The theory of computing the self-aligning torque SAT will be explained referring to Fig. 5 showing the manner of the torque generated between a road surface and the steering wheel.

Specifically, when a driver steers the steering wheel 1, the steering torque T is generated. According to the steering torque T, the electric motor 12 generates an assistant torque Tm. As a result, a. steered wheel W is steered and a reaction force, the self-aligning torque SAT is generated. Further, in this case, a torque resisting the steering of the steering wheel 1 is generated owing to the inertia J and friction (static friction) Fr of the electric motor 12. Considering the balance among these forces, the motion equation is expressed by the following Equation (1)

$$J \cdot \alpha m + Fr \cdot sign(\omega m) + SAT = Tm + T \ldots \ldots \quad (1)$$

Now, by Laplace-transforming Equation (1) with the initial value of 0, and solving the equation thus obtained in term of the self-aligning torque SAT, the following Equation (2) is acquired.

$$SAT(s) = Tm(s) + T(s) - J \cdot \alpha m(s) + Fr \cdot sign(\omega m(s)) \ldots (2)$$

As understood from Equation (2), by previously acquiring the inertia J and static friction Fr of the electric motor 12 as constants, the self-aligning torque SAT can be detected on the basis of the motor angular speed $\omega m$, motor angular acceleration $\alpha m$, assistant torque Tm and steering torque T. Now, since the assistant torque Tm is proportional to the steering assistant current command value It, the steering assistant current command value It is employed in place of the assistant torque Tm.

The inertia compensated value Ii computed by the inertia compensating unit 34 and the self-aligning torque SAT computed by the SAT detecting unit 35 are summed by an adder 36. The summed output from the adder 36 and the convergence compensated value Ic computed by the convergence compensating unit 33 are summed by an adder 37 to compute a command compensated value Icom. This command compensated value Icom is added to the steering assistant torque command value It produced from the steering assistant torque command value computing unit 21 by an adder 38 thereby to compute a compensated torque command value Itc. The compensated torque command value Itc is supplied to the current correcting unit 23.

The current correcting unit 23 serves to restrict a torque fluctuation generated when the crossing angle $\alpha$ in the universal joints 4 and 6 changes by the tilting operation of the tilting mechanism.

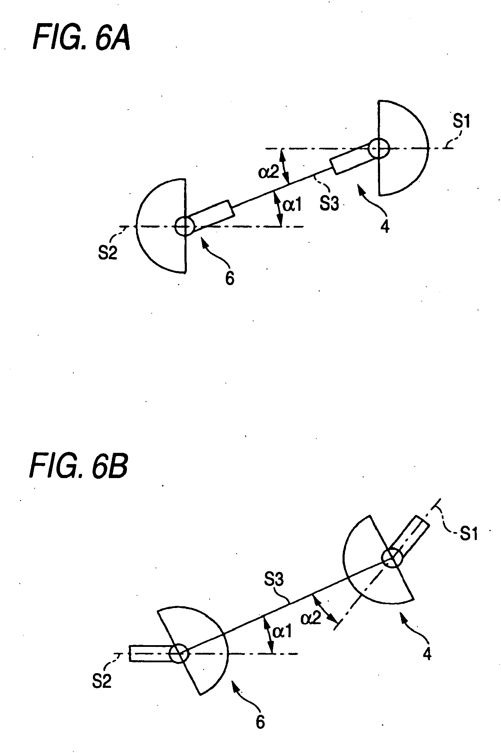

Generally, as a manner of using two universal joints 4 and 6, there are the cases where as seen from Fig. 6 (a), a driving shaft S1 and a driven shaft S2 whose axial centers are in parallel are connected to each other by an intermediate shaft S3; and where as seen from Fig. 6 (b), the driving shaft S1 and the driven shaft S2 which cross at a predetermined angle are connected to each other by the intermediate shaft S3.

In both cases, if the input angle $\alpha 1$ which is a crossing angle between the driving shaft S1 and the intermediate shaft S3 is equal to the output angle $\alpha 2$ which is a crossing angle between the intermediate shaft S3 and the driven shaft S2, the torque fluctuation between the driving shaft S1 and the driven shaft S2 can be cancelled.

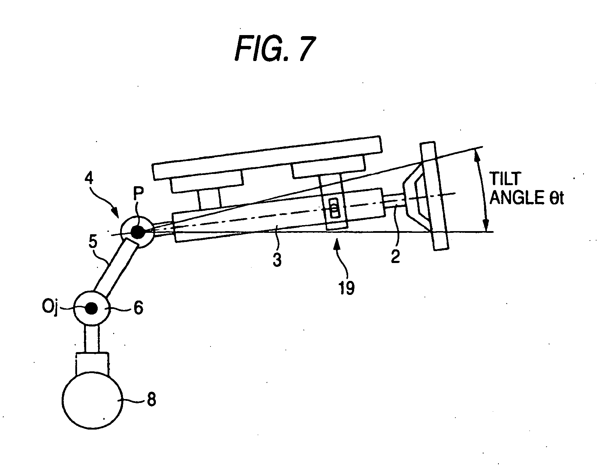

However, in the column-assistant electric power steering apparatus as shown in Fig. 1, as schematically shown in Fig. 7, the steering column 3 which rotatably supports the steering shaft 2 is movable vertically within a range of a predetermined tilting angle $\theta t$ in a vertical plane around a pivoting position P by a manual or automated tilting mechanism 18.

In this case, as seen from Fig. 7, if the pivoting center P of the tilting mechanism 15 agrees with the joint center of the universal joint 4 nearer to the tilting mechanism 15, the input angle α1 changes according to a change in the tilting angle θt so that the torque fluctuation cannot be cancelled. Also where the pivoting center P of the tilting mechanism 15 does not agree with the joint center Oj of the universal joint 6, the torque fluctuation cannot be cancelled.

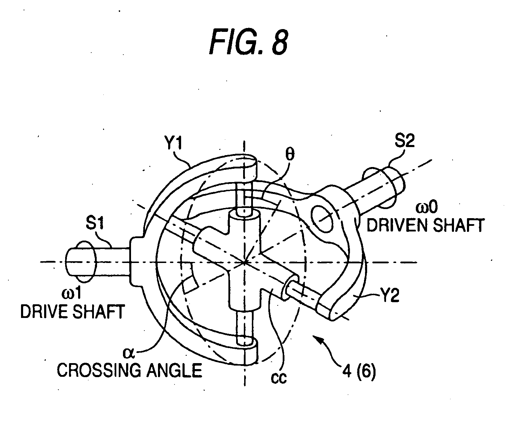

Now, as schematically shown in Fig. 8, each of the universal joints 4 and 6 is provided with a yoke Y1 connected to the driving shaft S1, a yoke Y2 connected to the driven shaft S2 and a cross-coupling segment CC coupling these yokes. Assuming that the crossing angle between the driving shaft S1 and the driven shaft S2 is α, the rotating angle of the driving shaft S1 is θ, the angular speed of the driving shaft S1 is ω1 and the angular speed of the driven shaft S2 is ω2, the angular speed ω2 of the driven shaft S2 can be expressed by the following Equation (3)

$$\omega2 = \{(\cos\alpha)/(1-\sin^2\theta*\sin^2\alpha)\}*\omega1 \quad\ldots\ldots \quad\quad (3)$$

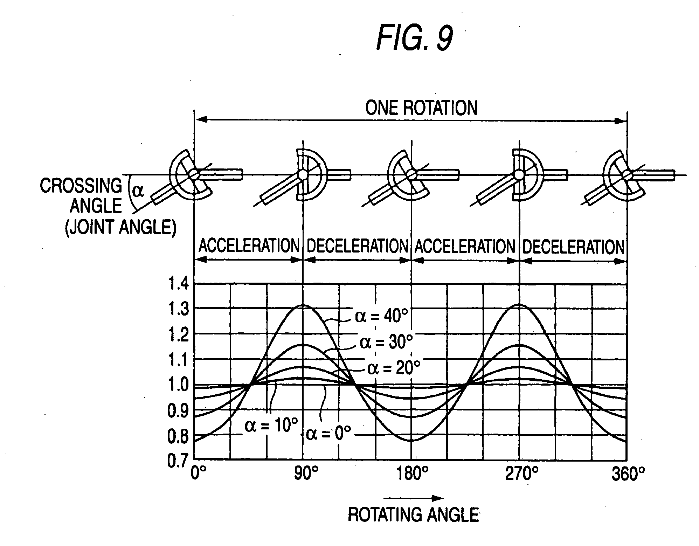

Thus, as seen from Fig. 9, the angular speed ratio of the driven shaft S2 to the driving shaft S1 changes in a cosine wave fashion for the steering angle θ. While the steering angle θ is 0° to 90°, acceleration is done; while the steering angle is 90° to 180°, deceleration is done; while the steering angle is 180° to 270°, acceleration is done again; and while the steering angle is 270° to 360°, deceleration is done. It should be noted that the amplitude increases as the crossing angle α increases.

Meanwhile, in the universal joint, as described above, changes in the angular speed ratio between the input shaft and the output shaft occur. Considering the fact that when the angular speed ratio changes, the torque also changes, assuming that the input shaft torque is T1 and the output shaft torque is T2, T1·ω1 = T2·ω2. If Equation (3) is substituted for this equation, the output shaft torque T2 can be expressed by the following Equation (4)

$$T2 = \{(1-\sin^2\theta*\sin^2\alpha)/(\cos\alpha)\}*T1 \quad\ldots\ldots \quad\quad (4)$$

Thus, the quantity of change ε indicative of the torque fluctuation can be expressed by the following Equation (5) on the basis of the ratio between the input shaft torque T1 and the output shaft torque T2.

$$\varepsilon = T1/T2 = (\cos\alpha)/(1-\sin^2\theta*\sin^2\alpha) \quad\ldots\ldots \quad\quad (5)$$

As apparent from Equation (5), the torque fluctuation can be acquired by using the crossing angle α and steering angle θ. Thus, where the electric tilting mechanism is mounted, it is provided with the tilting angle sensor so that the tilting angle θt detected by the tilting angle sensor is received by the control unit through e.g. CAN (Controller Area Network) communication or other communicating systems. Otherwise, the tilting angle θt detected by the tilting angle sensor is directly supplied to the control unit 15, and the control unit 15 estimates the crossing angle α serving as the joint angle on the basis of the tilting angle θt. Further, the quantity of change ε indicative of the torque fluctuation can be acquired from the above Equation (5) on the basis of the crossing angle α thus estimated and the steering angle θ.

However, most vehicles are not provided with the tilting angle sensor for detecting the tilting angle in the tilting mechanism so that the crossing angle α cannot be directly detected.
In order to obviate such inconvenience, in this embodiment, the torque fluctuation due to changes in the tilting angle θt is detected on the basis of the steering torque T and steering angle θ, and further the torque fluctuation is corrected on the basis of the torque fluctuation detected and the steering torque T.

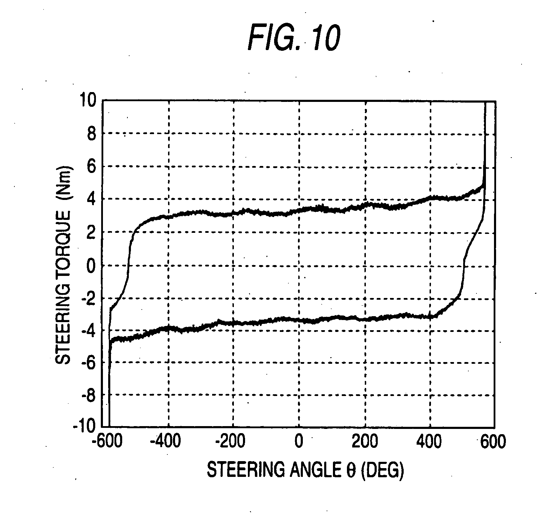

In the relationship between the steering angle θ and the steering torque T, as seen from Fig. 10, the steering torque contains the torque fluctuation due to the steering torque. Since the torque fluctuation is generated according to the steering torque θ, if the torque changing rate for the steering torque θ (which is obtained by differentiating the steering torque by the steering angle) is computed, the torque contained in the steering toque can be extracted.
So, by inputting the steering torque T and the steering angle θ, the torque changing rate dT/dθ for the steering angle θ is computed. This torque changing rate dT/dθ is expressed by

$$dT/d\theta = (\partial T/\partial t)(\partial t/\partial \theta) = (\partial T/\partial t)(1/\omega) \quad \ldots\ldots \quad (6)$$

Thus, by dividing the torque changing rate dT/dt for each predetermined time by the steering angular speed $\omega$ (=$\partial\theta/\partial t$), the torque changing rate dT/d$\theta$ for every predetermined times can be acquired.

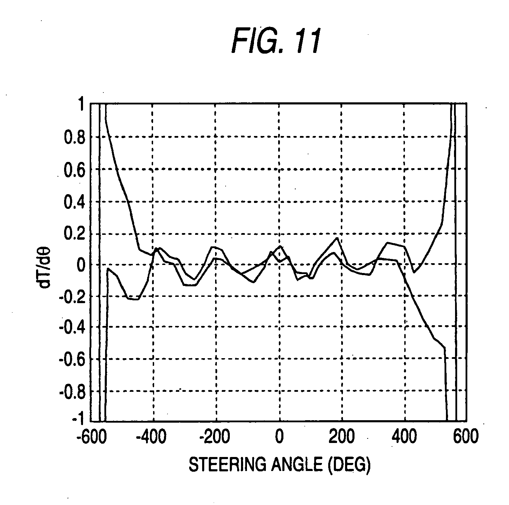

The thus computed torque changing rate dT/d$\theta$ for the steering angle $\theta$ is shown in Fig. 11. From Fig. 11, the amplitude and phase of the torque fluctuation can be acquired.

Since the quantity of change $\varepsilon$ in the torque fluctuation is expressed by Equation (5), it is approximated by the following Equation (7)

$$\varepsilon = (\cos\alpha)/(1-\sin^2\theta*\sin^2\alpha)$$

$$\cong A\cos(\theta + B) + C \quad \ldots\ldots \quad (7)$$

In this way, by simplifying the above Equation (5) like Equation (7), using the least square method, the coefficients "A" indicative of the amplitude, "B" indicative of the phase, and coefficient "C" as required are acquired. Now, if the torque changing point for the steering torque $\theta$ is previously known, only the amplitude A of the torque fluctuation may be computed.

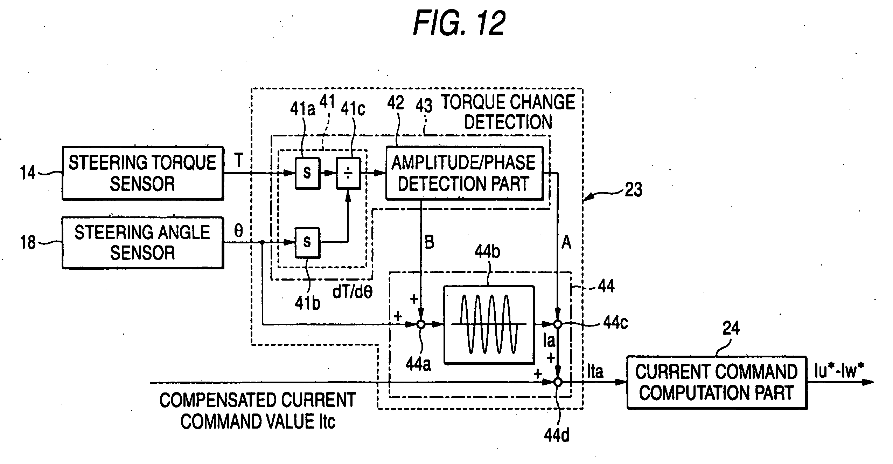

Thus, as shown in Fig. 12, the current correcting unit 23 shown in Fig. 3 includes a torque fluctuation detecting unit 43 and a current command value correcting unit 44. The torque fluctuation detecting unit 43 includes a torque changing rate computing unit 41 for computing the torque changing rate dt/d$\theta$ for the steering angle $\theta$ on the basis of the steering torque T detected by the steering torque sensor 14 and the steering angle $\theta$ detected by the steering angle sensor 15, and an amplitude/phase detecting unit 42 for detecting the amplitude and phase of the torque changing rate on the basis of the torque changing rate dT/d$\theta$ computed by the torque changing rate computing unit 41. The current command value correcting unit 44 computes the current command correction value Ia on the basis of the phase B and amplitude A detected by the amplitude/phase detecting unit 42 and adds this current command correction value Ia to the compensated current command value Itc for its correction.

The torque changing rate computing unit 41 includes a differentiating circuit 41a for differentiating the steering torque T, a differentiating circuit 41b for differentiating the steering torque $\theta$ and a dividing circuit 41c for dividing the differentiated output from the differentiating circuit 41a by the differentiating output from the differentiating circuit 41b thereby to compute the torque changing dT/d$\theta$.

The amplitude/phase detecting unit 42 acquires at least the amplitude A and phase B of the torque fluctuation on the basis of the torque changing rate dT/d$\theta$ for the steering angle $\theta$ by applying the least square method to the approximate expression of Equation (7).

The current command value correcting unit 44 includes an adder 44a for adding the steering angle $\theta$ to the phase B detected by the amplitude/phase detecting unit 42, a cosine component computing unit 44b for computing cos $(\theta + B)$ on the basis of the added output $(\theta + B)$ from the adder 44a, a multiplier 44c for multiplying the cosine wave component cos$(\theta + B)$ computed by the cosine wave computing component 44b by the amplitude A detected by the amplitude/phase detecting unit 42 thereby to compute the current command correction value Ia, and an adder 44d for adding the current command correction value Ia produced from the multiplier 44c to the compensated current command value Itc thereby to compute the corrected current command value Ita.

The d-q axis current command value computing unit 24 computes a d-axis current command value Id* and a q-axis current command value Iq* on the basis of the corrected current command value Ita produced from the current correcting unit 23, two-phase/three-phase converts the thus computed d-axis current command value Id* and q-axis current command value Iq* thereby to compute three-phase current command values Iu*, Iv* and Iw* which are supplied to the motor current control unit 25.

The motor current control unit 25 includes a motor current detecting unit 60 for detecting the motor currents Iu, Iv and Iw supplied to individual phase coils Lu, Lv and Lw of the electric motor 12, subtracters 61u, 61v and 61w for individually subtracting the motor currents Iu, Iv and Iw detected by the motor current detecting unit 60 from the current command values Iu*, Iv* and Iw* supplied from the d-q axis current command value computing unit 24 to acquire the current differences $\Delta$Iu, $\Delta$Iv and $\Delta$Iw in the respective phases and a PI current control unit 62 for proportional-integration-controlling the current differences $\Delta$Iu, $\Delta$Iv and $\Delta$Iw in the respective phases thereby to compute current command values Vu, Vv and Vw.

The motor current control unit 25 further includes a duty ratio computing unit 63 for executing the duty ratio computation on the basis of the voltage command values Vu, Vv and Vw received from the PI current control unit 62 to compute the duty ratios $D_{UB}$, $D_{VB}$, $D_{WB}$ in the respective phases, and an inverter 64 for supplying three phase motor currents Iu, Iv and Iw on the basis of the duty ratios Du, Dv and Dw computed by the duty ratio computing unit 63 to the electric motor 12.

Next, an explanation will be given of the operation of the first embodiment.

Now, in order to start the running of a vehicle, an ignition switch IG is turned on so that the controller 15 is powered up to start the execution of the steering assistant control processing.

Thus, the controller 15 is supplied with the steering torque T detected by the steering torque sensor 14, vehicle speed V detected by the vehicle speed sensor 16, motor current detected values Iu to Iw detected by the motor current detecting units 60u to 60w and motor rotating angle θm detected by the rotating angle sensor 17.

Therefore, the steering torque assistant torque command value computing unit 21 computes the steering assistant torque command value Ir on the basis of the steering torque T and vehicle speed V referring to the steering assistant command value computing map as shown in Fig. 4.

On the other hand, the angular speed computing unit 31 computes the motor angular speed ωm from the motor rotating angle θm detected by the rotating angle sensor 17. The angular acceleration computing unit 32 computes the motor angular acceleration αm from the motor angular speed ωm thus computed.

The convergence compensating unit 33 computes the convergence compensated value Ic on the basis of the motor angular speed ωm; the inertia compensating unit 34 computes the inertia compensated value Ii on the basis of the motor angular acceleration αm; and the SAT detecting unit 35 detects the self-aligning torque SAT on the basis of the motor angular speed ωm and motor angular acceleration αm. The adders 36 and 37 sum up these values to compute the command value compensation value Icom. The adder 38 adds the command value compensation value Icom to the steering assistant torque command value It, thereby computing the compensated current command value Itc which will be supplied to the current correcting unit 23.

In the current correcting unit 23, the steering torque T is differentiated by the differentiating circuit 41a and the steering angle θ is differentiated by the differentiating circuit 41b. The thus obtained values are supplied to the divider 41c so that the differentiated output from the differentiating circuit 41a is divided by the differentiated output from the differentiating circuit 41b, thus computing the torque changing rate dT/dθ for the steering angle. The thus computed torque changing rate dT/dθ is supplied to the amplitude/phase detecting circuit 42 to compute the amplitude A and phase B of the torque fluctuation.

In the adder 44a, the phase B computed by the amplitude/phase detecting unit 42 is added to the steering angle θ thereby to acquire (θ + B). Its cosine component cos (θ + B) is computed by the cosine wave component computing unit 44b. In the multiplier 44c, the cosine component cos(θ + B) is multiplied by the amplitude A thereby to compute the current command correction value Ia for restricting the torque changing rate. In the adder 44d, the thus computed current command value correction value Ia is added to the compensated current command value Itc, thereby computing the corrected current command value Ita for canceling the torque fluctuation according to the steering angle θ generated in the universal joints 4 and 6.

In this case, if the crossing angles α1 and α2 in the universal joints 4 and 6 are equal to each other, the torque fluctuation does not occur. Thus, the torque changing rate dT/dθ computed by the torque changing rate computing unit 41 is nearly "0" and the amplitude A and phase B detected by the amplitude/phase detecting unit 42 are also "0". Therefore, the current command correction value Ia produced from the multiplier 44c is also "0". Accordingly, the compensated current command value Itc, as it is, is supplied from the adder 44d to the current command value computing unit 24.

Thus, in the d-q axis current command value computing unit 24, on the basis of the compensated current command value Itc, the d-axis current command value Id* and q-axis current command value Iq* are computed. The thus computed d-axis current command value Id* and q-axis current command value Iq* are subjected to the two-phase/three-phase conversion thereby to compute three-phase current command values Iu*, Iv* and Iw* which are supplied to the motor current control unit 25, thereby generating the motor driving currents Iu, Iv and Iw.

In this case, in a state where the vehicle is stopping and the steering wheel 1 is not steered, the steering torque T detected by the steering torque 14 is "0" and the vehicle speed V detected by the vehicle speed sensor 16 is also "0". So, the steering torque command value Ir computed by the steering assistant torque command value computing unit 21 is also "0".

The motor angular speed ωm computed by the angular speed computing unit 31 is also "0" and the motor angular acceleration αm computed by the angular acceleration computing unit 32 is also "0". So, the self-aligning torque SAT detected by the SAT detecting unit 35 is also "0".

Thus, the compensated steering assistant torque command Itc is "0". This compensated steering assistant torque command Itc of "0" is supplied to the d-q axis current command value computing unit 24. In the d-q axis current command value computing unit 24, on the basis of the motor rotating angle θm and motor angular speed ωm, the operation of the command values in the d-q axis coordinate system is executed thereby to compute a d-axis target current Id* and a q-axis target current Iq*. These d-axis target current Id* and the q-axis target current Id* are subjected to the two-phase/three-phase conversion thereby to provide the three-phase current command values Iu*, Iv* and Iw* of "0", respectively. Three-phase current command values Iu*, Iv* and Iw* of "0" are supplied to the motor current control unit 25.

In the motor current control unit 25, since the motor currents Iu to Iw detected by the motor current detecting unit 60 are also "0", the current differences ΔIu to ΔIw produced from the subtracters 61u to 61W are also "0". The voltage command values Vu to Vw produced from the PI current control unit 62 are also "0". Thus, the duty ratios Du to Dw produced from the duty ratio computing unit 63 are 0%. Since the duty ratios of "0" are correspondingly supplied to the inverter 64, the motor currents Iu to Iw produced from the inverter 64 are also "0" so that the electric motor 12 continues the stopped state.

In this stopped state of the electric motor 12, when the steering wheel 1 is subjected to "steer without driving" of steering rightward (or leftward), the steering torque T according to the steering direction is detected by the steering torque sensor 14. This steering torque T is supplied to the controller 15. In this case, since the vehicle speed V is "0", the innermost characteristic curve is selected. Thus, the steering assistant torque command value It which swiftly becomes a large value with an increase in the steering torque T is detected by the steering assistant torque command value computing unit 21. This steering assistant torque command value It is phase-compensated by the phase compensating unit 21b. The thus obtained torque is supplied to the adder 38. Further, owing to the steering, the motor angular speed ωm and motor angular acceleration αm are also produced.

Thus, the command compensation value Icom computed by the command value compensating unit 22 is also supplied to the adder 38 so that the compensated steering assistant current command value Itc is computed. The compensated steering assistant current command value Itc is supplied to the current correcting unit 23. Thus, as described previously, the current command correction value Ia for canceling the torque fluctuation generated in the universal joints 4 and 6 is computed.
This current command correction value Ia is added to the compensated steering assistant current command value Itc by the adder 44d. Therefore, the corrected current command value Ita capable of surely restricting the torque fluctuation, which is generated in the universal joints 4 and 6 when the tilting angle θt is changed by the tilting mechanism, can be computed. This corrected current command value Ita is supplied to the current command value computing unit 24 thereby to compute the three-phase current command values Iu* to Iw*. On the basis of these current command values, the motor driving currents Iu to Iw are computed by the motor current control unit 25.

Thus, in the motor current control unit 25, since the motor current values Iu to Iw detected by the motor current detecting unit 60 are "0", as the current differences ΔIu to Δw produced from the subtracters 61u to 61w, the current command values Iu* to Iw* are supplied, as they are, to the PI current control unit 62. As a result of the PI control processing by the PI current control unit 62, the voltage command values Vu to Vw are supplied to the duty ratio computing unit 63 to compute the duty ratios Du to Dw. The duty ratios Du to Dw thus computed are supplied to the inverter 64 so that the motor currents Iu to Iw are produced from the inverter 64. Thus, the electric motor 12 is rotationally driven so that the steering assistant torque according to the steering torque T is generated. Since this steering assistant torque is transmitted to the output shaft 2b of the steering shaft 2 through the decelerating gear 11, the steering in the "steer without driving" state can be softly done.

Thereafter, when the vehicle is started, the vehicle speed V detected by the vehicle speed sensor 16 increases. Therefore, if the steering wheel 1 is steered during running, as the steering assistant torque command value computed by the steering assistant torque command value computing unit 21, in the map shown in Fig. 4, the more outer characteristic curve is selected as the vehicle speed V increases. Thus, the increasing rate of the steering assistant torque command value corresponding to an increase in the steering torque T decreases Correspondingly, the steering assistant torque generated by the electric motor 12 becomes smaller than at the time of the "steer without driving". As a result, the optimum steering assistant torque corresponding to the vehicle speed V can be generated.

In this way, in the first embodiment described above, on the basis of the steering toque T and steering angle θ, the torque changing rate dT/dθ for the steering angle is computed; the torque changing rate dT/dθ thus computed is approximated as its cosine component. Thereafter, using the least square method, at least the amplitude A and phase B of the torque fluctuation are detected; on the basis of these values, the current command correction value Ia for restricting the torque fluctuation expressed by Acos(θ+B) is computed; and this current command correction value Ia is added to the compensated current command value Itc. Thus, the corrected current command value Ita for canceling the torque fluctuation can be computed. By driving/controlling the electric motor 12 on the basis of the corrected current command value Ita, the torque fluctuation, which is generated when the crossing angle α in the universal joints 4 and 6 changes by the change of the tilting angle θt by the tilting operation of the tilting mechanism, can be accurately restricted.

[Second Embodiment]

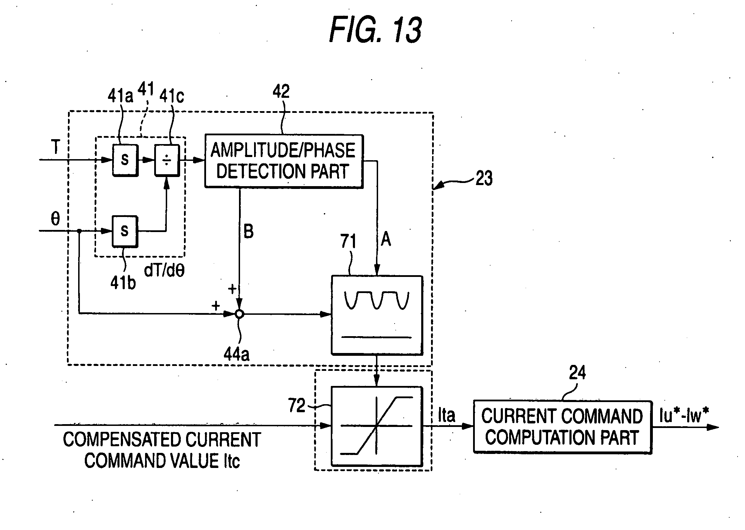

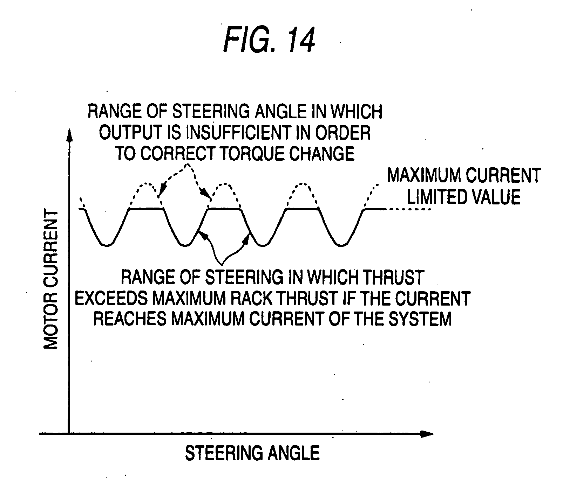

Next, referring to Figs. 13 and 14, an explanation will be given of the second embodiment of this invention. In this second embodiment, unlike the first embodiment in which the current command value is corrected in order to restrict the torque fluctuation, the current command value is limited so that the torque fluctuation generated in the universal joint is within the range of the maximum permissible torque of the torque transmission system.

Specifically, in the second embodiment, in the current correcting unit 23 in the first embodiment, as shown in Fig. 13, the cosine wave component computing unit 44b, multiplier 44c and adder 44d are omitted; and instead of this, the current correcting unit 23 includes a limited value computing unit 71 for computing a maximum current limited value I1t on the basis of the phase B and amplitude A detected by the amplitude/phase detecting unit 42 and a limiting unit 72 for receiving the compensated current command value Itc as well as the limited value I1t computed by the limited value computing unit 71. Except the above configuration, the current correcting unit 23 according to this embodiment is the same as that in Fig. 12 described above.

In this second embodiment, when the torque changing rate $dT/d\theta$ for the steering angle is computed by the torque changing rate computing unit 41 and the amplitude A and phase B of the torque fluctuation is detected by the amplitude/phase detecting unit 42 on the basis of the torque changing rate $dT/d\theta$ thus computed, the limited value computing unit 71 limits the compensated current command value Itc by the maximum current value Imax of the electric motor 12 and on the basis of the amplitude A and phase B of the torque changing rate $dT/d\theta$, computes the current limited value I1t for restricting the torque exceeding the maximum permissible torque in the torque transmitting system from the universal joint 4 to the steering gear 8 in the steering mechanism SM, which may be generated by the torque fluctuation in the universal joint.

More specifically, as seen from Fig. 14, in a range of the steering angle in which the output is insufficient in order to restrict the torque fluctuation, the motor current is limited to the maximum current value Imax. On the other hand, in a range of the steering angle in which when the compensated current command value Itc reaches the maximum current value Imax, the torque exceeding the permissible maximum torque in the torque transmitting system in the steering mechanism SM is generated owing to the torque fluctuation in the universal joints 4 and 6, the current limited value is reduced to provide the torque which is not larger than the permissible maximum torque generated in the torque transmitting system.

Accordingly, in accordance with the second embodiment, when the steering assistant torque generated by the electric motor 12 is transmitted to the steering shaft 2 through the decelerating gear 11, on the basis of the phase B and amplitude A of the torque fluctuation detected by the torque changing rate computing unit 41, the compensated current command value Itc is current-limited to provide the torque not larger than the maximum permissible torque in the range of the steering angle in which the torque exceeding the maximum permissible torque is generated. Thus, by accurately detecting the torque fluctuation generated in the universal joints 4 and 6 when the crossing angle $\alpha$ in the universal joints 4 and 6 is changed, if the torque exceeds the permissible maximum torque in the torque transmitting system owing to the torque fluctuation detected, by limiting the compensated current command value Itc, the torque in the torque transmitting system can be controlled so that it is not larger than the permissible torque.

Further, it is possible to surely prevent excessive torque from acting on the torque transmitting system thereby to improve reliability of the electric power steering apparatus.

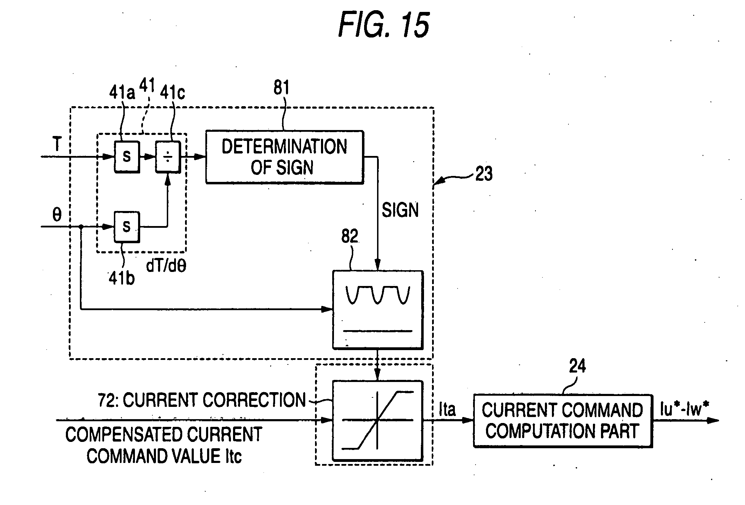

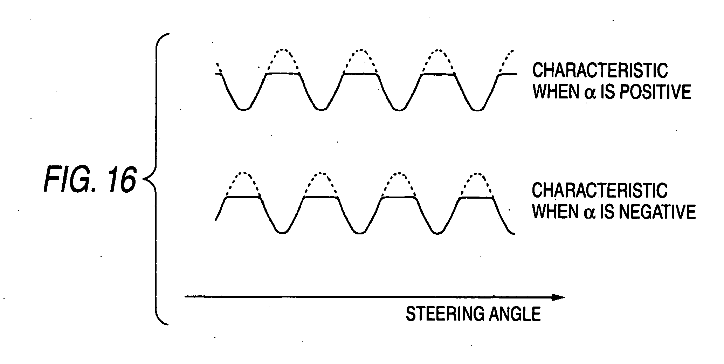

Additionally, in the above second embodiment, the explanation has been given of the case where the current limited value I1t is computed on the phase B and amplitude A of the torque fluctuation detected by the amplitude/phase detecting unit 42. However, without being limited to this, if the torque changing point is previously known through the experiment, the phase B of the torque fluctuation may not be detected but only the amplitude A has only to be detected. Further, where only the maximum value of the compensated current command value Itc is limited as in the second embodiment, without acquiring the amplitude A of the torque fluctuation, the following manner may be adopted. Namely, the maximum amplitude acquired from the experiment is set; as shown in Fig. 15, the sign of the torque changing rate $dT/d\theta$ computed by the torque changing rate computing unit 41 is determined by a sign determining unit 81; and according to whether or not the sign is positive or negative, namely, the direction of the amplitude of the torque fluctuation, the current limited values I1t out of phase by 90° from each other are computed by a current limited value computing unit 82. In this case, the reason why the current limited values I1t are changed by 90° according to the torque changing rate $dT/d\theta$ is as follows. If the crossing angle $\alpha$ in the universal joints 4 and 6 changes to a positive or negative value according to the tilting position of the steering column 3, the torque changing characteristic as shown in Fig. 9 will be inverted up and down with respect to "1.0". So, the current limited value I1t is also correspondingly changed by 90° as shown in Fig. 16. In this way, the current limited value I1t can be inverted (Incidentally, the torque fluctuation in the universal joint, as shown in Fig. 9, creates one period of 180° so that if the phase is shifted by 90°, the torque changing characteristic will be inverted up and down).

Thus, by simple processing of changing the phase of the current limited value I1t through determination of the sign, the torque in the torque transmitting system generated owing to the torque fluctuation in the universal joints 4 and 6 can be limited to the permissible maximum torque or less. This reduces the burden of computing.

Further, in the embodiments described previously, the explanation has been given of the case where the d-axis current command value Id* and q-axis current command value Iq* computed by the d-q axis current command value computing unit 24 are subjected to the two-phase/three phase conversion. However, without being limited such a case, without executing the two-phase/three-phase conversion, in place of this, a three-phase/two-phase converting unit may be provided at the output side of the motor current detecting unit 60 in which the three-phase currents of the motor are converted into the d-axis current Id and q-axis current Iq. In this case, the differences between a d-axis target current Id* and a q-axis target current Iq* and the d-axis current Id and q-axis current Iq of the motor are computed and current-controlled by the current control unit 62 and thereafter subjected to the two-phase/three-phase conversion.

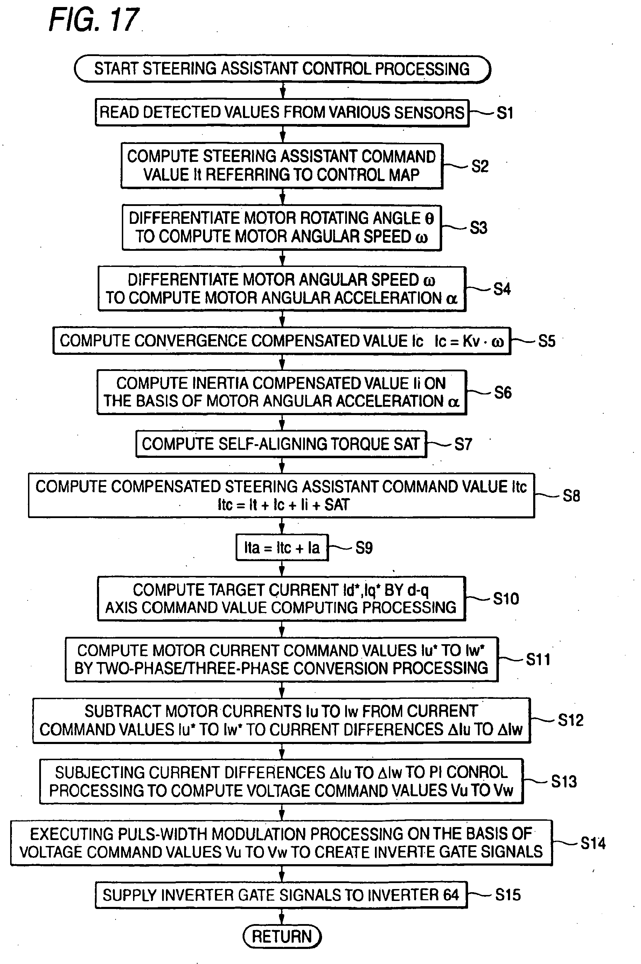

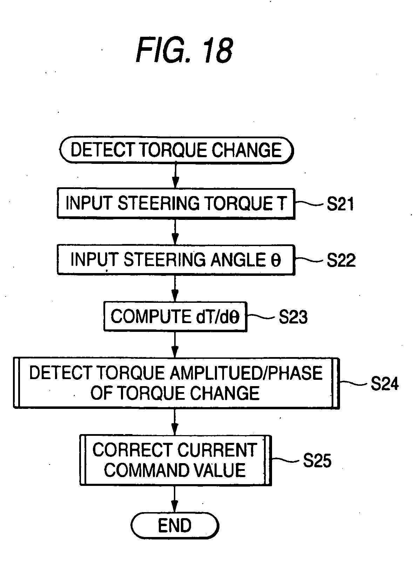

Furthermore, in the embodiments described previously, the explanation has been given of the case where the controller 15 is constructed of hardware. However, without being limited to such a case, a microcomputer may be applied in order to process, through software, the functions of the steering assistant torque command value computing unit 21, command value compensating unit 22, current correcting unit 23, d-q axis current command value computing unit 24 and the subtracters 61u to 61w, PI current control unit 62 and duty ratio computing unit 63 in the motor control unit 25. As the processing in this case, the steering assistant control processing shown in Fig. 17 and the current correcting processing shown in Fig. 18 may be executed by the microcomputer.

Now, as shown in Fig. 17, the steering assistant control processing is executed as timer interrupting processing for every predetermined times (e.g. 1m sec). First, in step S1, the detected values of various sensors such as the steering torque sensor 14, vehicle speed sensor 16, rotating angle sensor 17 and motor current detecting unit 60 are read. Next, in step S2, referring to the steering assistant torque command value computing map shown in Fig. 4 on the basis of the steering torque T, the steering assistant torque command value Ir is computed and subjected to the phase compensating processing and center-response improving processing thereby to compute the steering assistant torque command value It. Thereafter, the processing proceeds to step S3.

In step S3, the motor rotating angle θm is differentiated to compute the motor angular speed ωm. Next, in step S4, the motor angular speed ωm is differentiated to compute the motor angular acceleration αm. In step S5, like the convergence compensating unit 33, the motor angular speed ωm is multiplied by a compensating coefficient Kv set according to a vehicle speed V thereby to compute the convergence compensated value Ic. Thereafter, the processing proceeds to step S6.

In step S6, like the inertia compensating unit 34, the inertia compensated value Ii is computed on the basis of the motor angular acceleration α. Next, in step S7, like the SAT detecting unit 35, on the basis of the motor angular speed ωm, motor angular acceleration αm, steering torque T and steering assistant torque command value It, the operation in Equation (2) described above is done to compute the self-aligning torque SAT. Next, in step S8, the convergence compensated value Ic, inertia compensated value Ii and self-aligning torque SAT which have been computed in steps S4 to S6 are added to the steering assistant torque Ir thereby to compute the compensated steering assistant current command value Itc. Next, in step S9, the current command corrected value Ia, which is computed by current command corrected value computing processing described later, is added to the compensated steering assistant current command value Itc. Thereafter, in step S10, like the d-q axis current command value computing unit 24, the d-q axis command value computing processing is executed to compute the d-axis target current Id* and q-axis target current Iq*. Next, in step S11, the two-phase/three-phase conversion processing is executed to compute the motor current command values Iu* to Iw*.

Next, in step S12, the motor current Iu to Iw are subtracted from the motor current command values Iu* to Iw* to compute the current differences ΔIu to ΔIw. Next, in step S13, the current differences ΔIu to ΔIw are subjected to the PI control processing to compute the voltage command values Vu to Vw. In step S13, after the duty ratios $D_{UB}$ to $D_{WB}$ are calculated, on the basis of the voltage command values Vu to Vw, pulse-width modulation processing is executed to create inverter gate signals. In step S15, the inverter gate signal thus created is supplied to the inverter 64. Thus, the steering assistant control processing is ended to return to a predetermined main program.

Further, as shown in Fig. 18, the current command corrected value computing processing is executed as timer interrupting processing for every predetermined time (e. g. 1m sec). First, in step S21, the steering torque T is read and thereafter, in step S22, the steering angle θ is read. Next, in step S23, the torque changing rate dT/dθ for the steering angle is computed. The processing proceeds to step S24. In step S24, like the amplitude/phase detecting unit 42 described previously, the torque changing rate dT/dθ is approximated by Equation (7) described above and using the least square method, its amplitude A and phase B are detected. In step S25, the operation of the above Equation (7) is done to compute the current command correction value Ia. Thus, the timer interrupting processing is ended to return to the predetermined main program.

In the processing in Figs. 17 and 18, the processing in step S2 in Fig. 17 corresponds to the current command value computing unit; and the processing in steps S3 to S14 and the inverter 64 correspond to the motor control unit. The processing in steps S21 to S25 in Fig. 18 corresponds to current correcting unit. In these steps, the processing in steps S21 to S24 correspond to the torque fluctuation detecting means and the processing in step S25 corresponds to the current command value correcting unit.

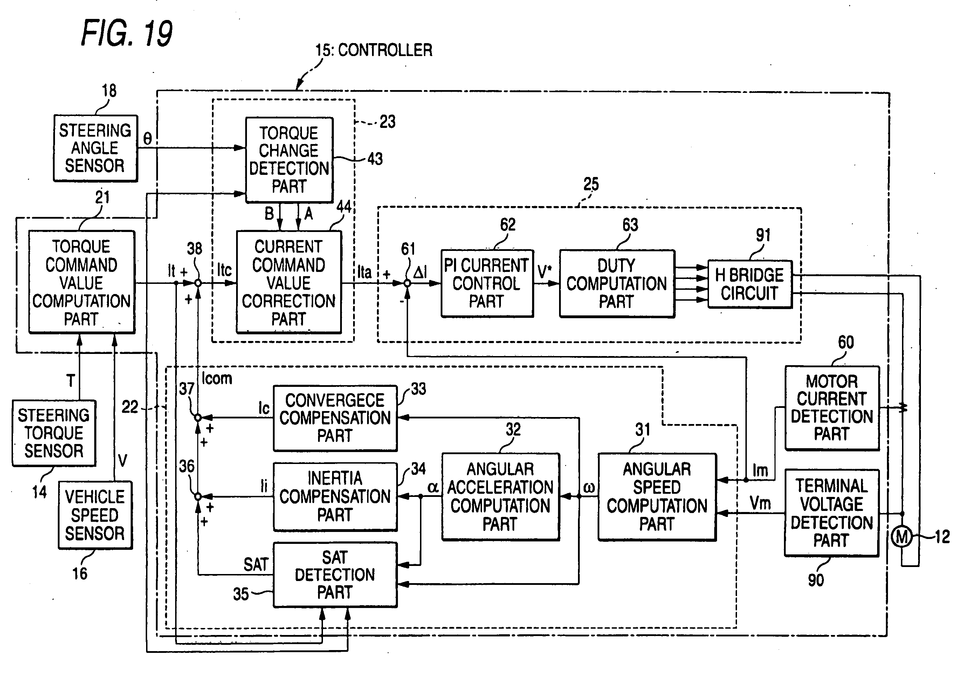

In the embodiments described above, the explanation has been given of the case where this invention is applied to a brushless motor. However, the application is not limited to such a case. Where this invention is applied to a brush-equipped motor, as shown in Fig. 19, on the basis of the motor current detected value Im produced from the motor current detecting unit 60 and the motor terminal voltage Vm produced from a terminal voltage detecting unit 90, in the angular speed computing unit 31, the operation of the following Equation (8) is done to compute the motor angular speed $\omega m$. Further, the d-q axis command value computing unit 24 is omitted and the corrected current command value Ita produced from the current correcting unit 23 is directly supplied to the motor control unit 25. The motor control unit 25 is constructed of the subtracting unit 61, PI current control unit 62 and duty ratio computing unit 63, which are singular respectively. The inverter 64 is changed into an H bridge circuit 91.

$$\omega m = (Vm - Im \cdot Rm)/K_0 \ldots \ldots \quad (8)$$

where Rm is a motor winding resistance and Ko is an electromotive force constant of the motor.

Further, in the embodiments described, the explanation has been given of the case where the torque changing rate $dT/d\theta$ for the steering angle is detected on the basis of the steering torque T detected by the steering torque sensor 14 and the steering angle $\theta$ detected by the steering angle sensor 18. Without being limited to such a case, the torque changing rate $dT/d\theta$ for the steering angle may be estimated on the basis of the current command value It corresponding to the steering torque T computed by the torque command computing unit 21 in place of the steering torque T, and the steering angle $\theta$.

Further, the torque changing rate $dT/d\theta$ for the steering angle may be estimated on the basis of the self-aligning torque SAT estimated from the balance of forces on a rack shaft of the steering in place of the steering torque T or current command value It, and the steering angle.

Further, in the embodiments described above, in order to estimate the torque changing rate accurately, it may be estimated under the condition that the steering torque T is a predetermined value or more (the torque fluctuation increases and so can be easily detected) and the steering angle $\theta$ is within a range of $\pm$ one turn (the vicinity of the steering limit where the torque abruptly changes is excluded).

Now, with referring to Figs.. 20 through 31, further electric power steering apparatus are described.

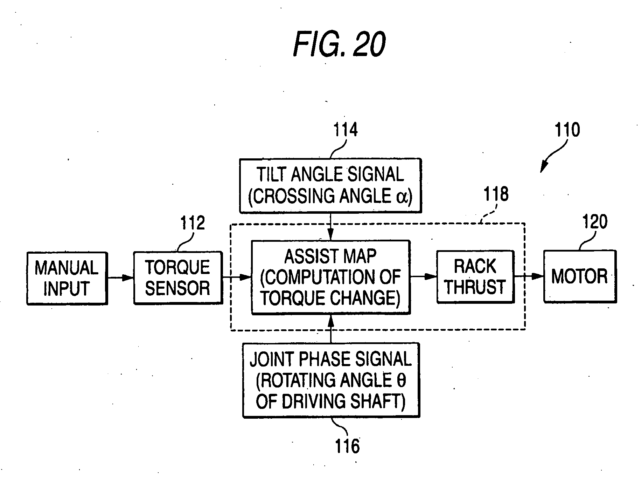

Fig. 20 is a block diagram of a further electric power steering apparatus. As seen from Fig. 20, an electric power steering apparatus 101 apparatus 10110 includes a torque sensor 112, a tilt sensor 114, an angle sensor 116, a control unit 118 and an electric motor 120. The electric power steering apparatus 101 is an electric power steering apparatus in which a manual or electric tilt angle adjusting mechanism and a cardan universal joint are included in a steering force transmitting system (not shown) connecting a steering shaft coupled with a steering wheel and a steering mechanism.

The torque sensor 112 detects steering torque which acts on a steering force transmitting system owing to a manual input by steering of a driver and supplies the steering torque thus detected to the control unit 118. The tilt sensor 114 detects the tilt angle of the manual or electric tilt angle adjusting mechanism (tilt column) and supplies it to the control unit 118 as a tilt angle signal. The angle sensor 116 detects the rotating angle $\theta$ of a driving shaft and converts the rotating angle $\theta$ thus detected into a joint phase signal to be supplied to the control unit 118. The control unit 118 receives the signal indicative of the steering torque from the torque sensor 112 and the tilt angle signal from the tilt sensor 114 thereby to estimate a cardan universal joint angle = crossing angle $\alpha$. Further, the control unit 118 receives the joint phase signal indicative of the rotating angle $\theta$ of the driving shaft from the angle sensor 116 and retrieves an assisting map on the basis of the inputted steering torque signal and joint phase signal and the estimated cardan universal joint angle = crossing angle $\alpha$ thereby to compute a torque fluctuation. The control unit 118 corrects the motor current value on the basis of the computing result, calculates a rack thrust on the basis of the corrected motor current value, and controls the drive of the electric motor 120 on the basis of the calculating result. The electric motor 120 supplies the assistant steering force corresponding to the motor current value to the steering force transmitting system through a wheel decelerating mechanism.

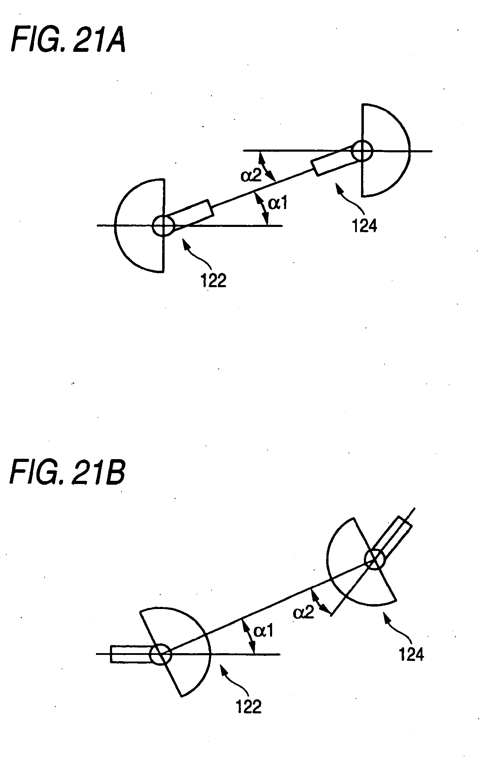

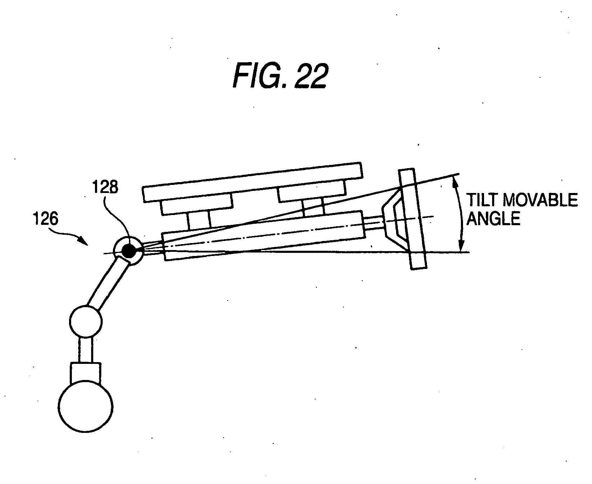

Now, in computing the torque fluctuation, the following matter is taken into consideration. Concretely, as seen from Fig. 21, where two universal joints are employed; if the respective joint angles $\alpha1$, $\alpha2$ of the universal joints 122, 124 are equal to the crossing angle $\alpha$, the torque fluctuation can be cancelled. However, if the tilt angle is changed by the manual or electric tilt angle adjusting mechanism so that the joint angles $\alpha1$, $\alpha2$ are changed to change the crossing angle $\alpha$, the torque fluctuation cannot be cancelled as it is. For example, as seen from Fig. 22, in the case of a waist-shaking tilt column 126, a tilt center 128 usually agrees with a cardan universal joint center, but where both do not agree with each other, if the tilt angle is changed, the crossing angle $\alpha$ is also changed.

In order to obviate such an inconvenience, where the electric tilting mechanism is mounted, the tilt angle signal detected by the tilt sensor 114 is received by the control unit 118 through e.g. CAN (Controller Area Network) communication or other communicating systems. Otherwise, the tilt angle signal detected by the tilt sensor 114 is directly supplied to the control unit 118, and the control unit 118 estimates the crossing angle $\alpha$ serving as the cardan universal joint angle on the basis of the tilt angle signal.

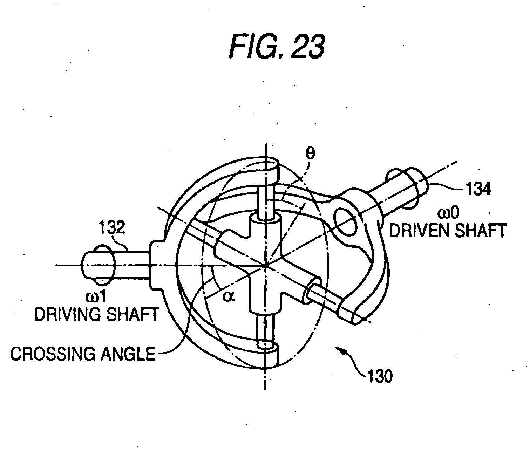

Further, as seen from Fig. 23, a cardan universal joint 130 is provided with a driving shaft 132 and a driven shaft 134. The driving shaft 132 is coupled with e.g. a steering wheel serving as an input shaft and the driven shaft 134 is coupled with e.g. a torsion bar serving as an output shaft and a steering mechanism. Where the driving shaft 132 or the driven shaft 134 cross to form an angle $\alpha$, therebetween, the angular speed $\omega_0$ can be acquired by the following equation (9)

$$\varpi_0 = \{(\cos\alpha)/(1-\sin^2*\sin^2\alpha)\}*\varpi_1 \ \ldots\ldots \qquad (9)$$

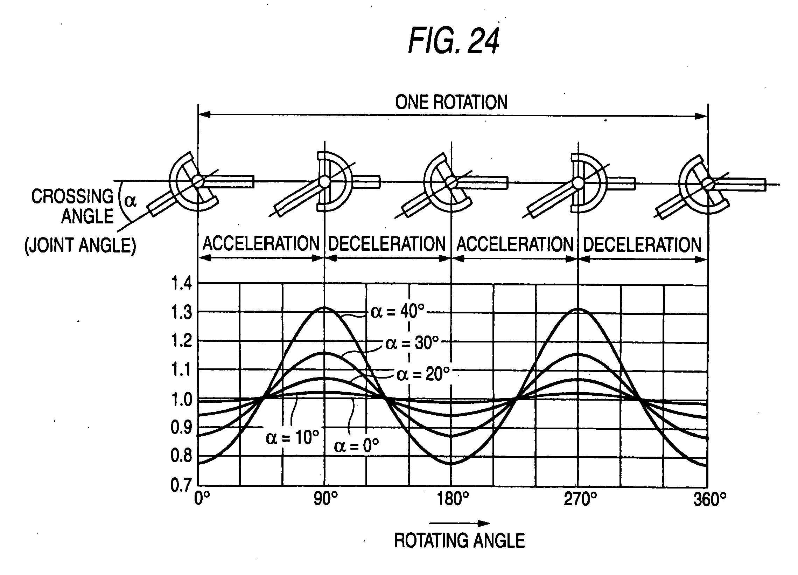

where $\omega_1$: a driving shaft angular speed, $\omega_0$: a driven shaft angular speed, $\alpha$: a crossing angle between both shafts, and $\theta$: a rotating angle of the driving shaft. The angular speed ratio of the output shaft to the input shaft is shown in Fig. 24.

Next, considering that when the angular speed changes, the torque also changes, assuming that the input shaft torque is $T_1$ and the output shaft torque is To, $T_0 \cdot \omega_0 = T_1 \cdot \omega_1$. If Equation (9) is substituted for this equation, the output shaft torque $T_0$ can be expressed by the following Equation (10)

$$T_0 = \{(1-\sin^2\theta*\sin^2\alpha)/(\cos\alpha)\}*T_1 \ \ldots\ldots \qquad (10)$$

Thus, the quantity of change $\varepsilon$ indicative of the torque fluctuation can be expressed by the following Equation (11) on the basis of the ratio between the input shaft torque $T_1$ and the output shaft torque $T_0$.

$$\varepsilon = T_1/T_0 = (\cos\alpha)/(1-\sin^2*\sin^2\alpha) \ \ldots\ldots \qquad (11)$$

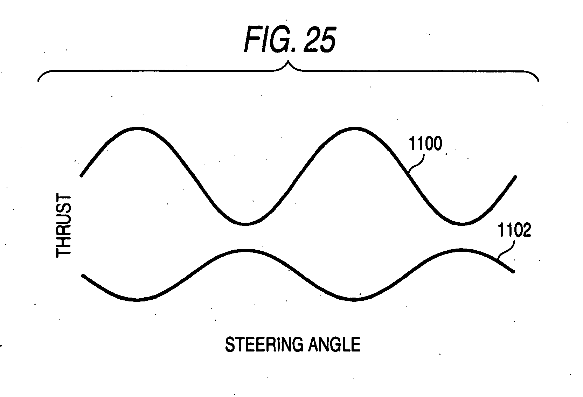

On the other hand, as seen from Fig. 25, in the process in which a manual input 1102 due to steering by a driver changes according to the steering angle, a rack thrust 1100 changes nearly inversely to an increase/decrease in the manual input 1102. Specifically, while the manual input 1102 tends to increase, the rack thrust 1100 tends to decrease. Inversely, while the manual input 1102 tends to decrease, the rack thrust 1100 tends to increase. For this reason, in acquiring the rack thrust 1100, if the joint phase characteristic is not considered, the relationship between the manual input 1102 and the rack thrust 1100 cannot be kept constant.

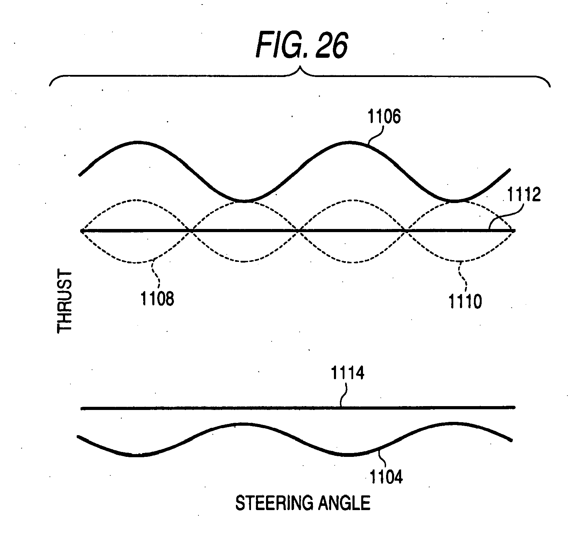

Thus, as seen from Fig. 26, considering that a manual input 1104 and a rack thrust 1106 change nearly inversely to each other before control, the motor current value is corrected according to the torque fluctuation by the joint phase 1108 and a rack thrust 1112 is acquired on the basis of the motor current value 1110 thus corrected. In this way, before control, even if the manual input 1104 is changed according to the steering angle, after control, the manual input 1114 and the rack thrust 1112 change keeping a constant relationship therebetween, thereby restricting changes in the manual input 1114.

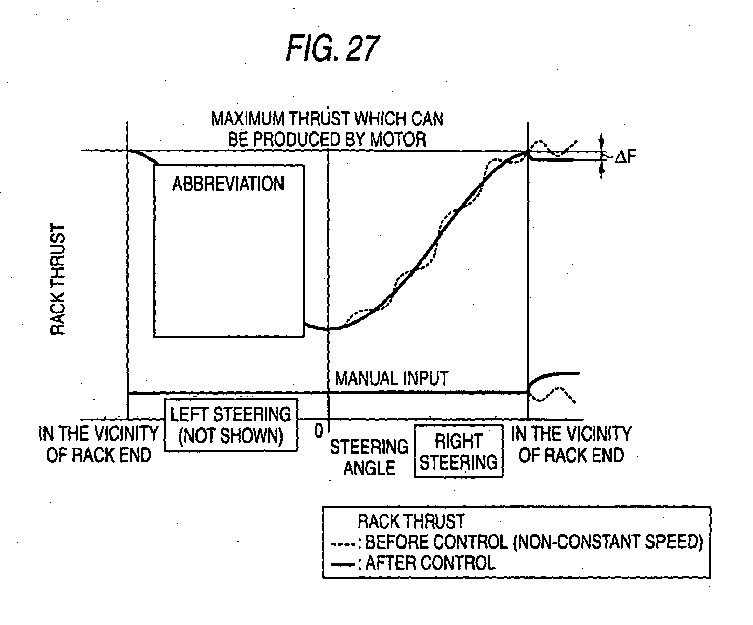

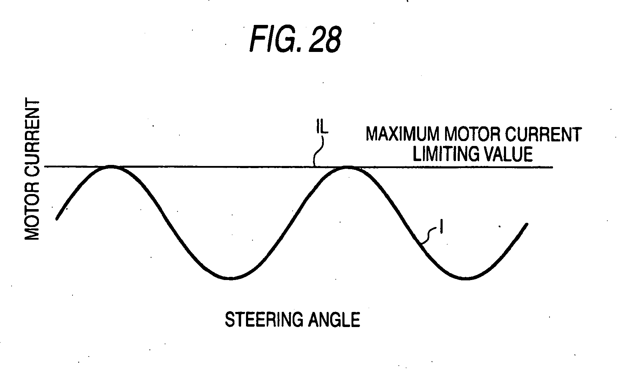

Further, as seen from Fig. 27, in the vicinity of the rack end, the rack thrust is limited to be not higher than the maximum thrust which can be produced by the electric motor 120. In this way, in the vicinity of the rack end, even if a shortage of the thrust ($\Delta$F) is generated by the torque fluctuation due to the change in the tilt angle, a change in the manual input due to steering by the driver can be reduced. Further, as seen from Fig. 28, since the current value I of the electric motor 120 is limited by a maximum motor current limiting value IL, if there is a margin of the output from the electric motor 120, the torque fluctuation for the manual input can be reduced.

Accordingly, the cardan universal joint angle = crossing angle $\alpha$ is estimated according to the tilt angle; the torque fluctuation is computed on the basis of the estimated crossing angle $\alpha$ and the joint phase signal (rotating angle $\theta$ of the driving shaft); the rack thrust is calculated on the basis of the computing result; and the motor current value is corrected on the basis of the rack thrust thus calculated. For this reason, even if a shortage of the thrust is generated by the torque fluctuation due to the change in the tilt angle, a change in the manual input due to steering by the driver can be reduced.

Next, an explanation will be given of another electric power steering apparatus. In this example, the following fact is taken in consideration. Namely, where the required rack thrust is so great that the motor output is at the maximum value, shortage of the rack thrust is likely to occur. In addition, if the torque fluctuation is not corrected in this state, the output exceeding the maximum rack thrust greatly influences the torque transmitting member. On the basis of this consideration, the torque fluctuation is corrected and the current value of the electric motor 120 is also controlled so that the required rack thrust can be acquired. Since this example intends to limit the maximum rack thrust, if the maximum cardan universal joint = crossing angle $\alpha$ is previously known, a predetermined cardan universal joint angle can be employed in place of the crossing angle estimated through the tilt sensor 114. The other construction is the same as the previous example.

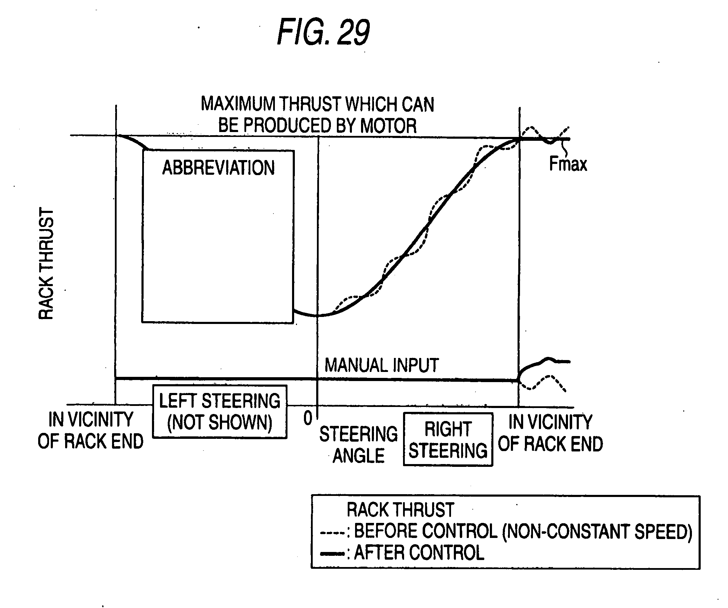

Concretely, the control unit 118 receives the signal indicative of the steering torque from the torque sensor 112 and also a predetermined (maximum) cardan universal joint angle = crossing angle $\alpha$ from the tilt sensor 114. Further, the control unit 118 receives the joint phase signal indicative of the rotating angle $\theta$ of the driving shaft from the angle sensor 116 and retrieves an assisting map on the basis of the inputted steering torque signal and joint phase signal and the predetermined cardan universal joint angle = crossing angle $\alpha$ thereby to compute the torque fluctuation. The control unit 118 corrects the motor current value on the basis of the computing result and calculates a rack thrust on the basis of the corrected motor current value. On the basis of the calculating result, in controlling the drive of the electric motor 120, the current value of the electric motor 120 is limited according to the rotating angle. For example, as seen from Fig. 29, the maximum current value is limited by the rotating angle and so usual current limitation is executed within a range the rotating angle not exceeding the maximum rack thrust Fmax. For this reason, also in the vicinity of the rack end, the rack thrust can be limited so as to be not higher than the maximum thrust Fmax which can be produced by the electric motor 120.

Specifically, the control unit 118 limits the motor current value using the torque fluctuation computed on the basis of the rotating angle $\theta$ of the driving shaft and controls the drive of the electric motor 120 on the motor current value thus limited. By executing the control in this way, it is possible to prevent the thrust exceeding the maximum rack thrust Fmax of the electric power steering apparatus from being applied to the rack. Further, in limiting the motor current value by the control unit 118, the maximum value of the motor current value is limited on the basis of the maximum rack thrust Fmax of the electric power steering apparatus so that the motor output can be effectively used to the utmost.

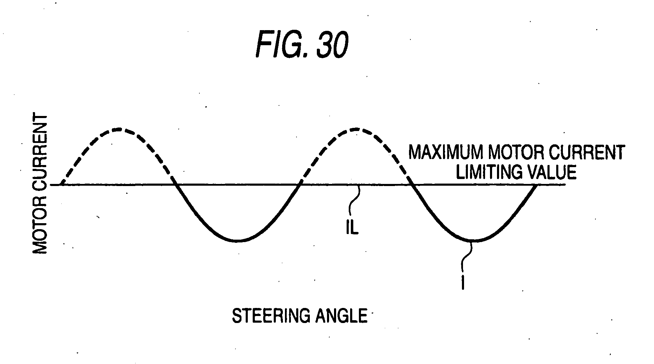

In this example, as seen from Fig. 30, since the current value I of the electric motor 120 is limited by a maximum motor current limiting value IL, if there is not a margin for the strength of a torque transmitting member and an output from the electric motor 120, the maximum rack thrust Fmax for the torque transmitting member can be taken priority by a reduction in the torque fluctuation for the manual input. Incidentally, in Fig. 30, the waveform indicated by a broken line represents the range of a steering angle in which the output from the electric motor 120 is insufficient in order to cancel the torque fluctuation, and the waveform indicated by a solid line represents the range of the steering angle in which if the current is produced to reach the maximum current, the rack thrust exceeds the maximum rack thrust.

In accordance with this example, the motor current value is limited by the torque fluctuation computed on the basis of the rotating angle $\theta$ of the driving shaft and the drive of the electric motor 120 is controlled on the basis of the motor current value thus limited. For this reason, it is possible to prevent the thrust exceeding the maximum rack thrust Fmax of the electric power steering apparatus from being applied to the rack. Further, in limiting the motor current value, the maximum value of the motor current value is limited on the basis of the maximum rack thrust Fmax of the electric power steering apparatus. For this reason, the motor output can be effectively used to the utmost.

Where the relationship between the vehicle steering angle and the cardan universal joint phase is previously determined, the control unit 118 can compute the torque fluctuation using the rotating angle of the driving shaft detected by the angle sensor 116 as a cardan universal joint phase signal. On the other hand, where the relationship between the vehicle steering angle and the cardan universal joint phase is not previously determined, a learning function is employed. For example, if the end is set for the rack end, the rack end is detected from the motor current of the electric motor 120 and the value detected by the angle sensor 116 at this time is stored as the steering angle. In this way, the rack end position can be detected.

Further, in executing the torque control by computing the torque fluctuation on the basis of the crossing angle detected through the tilt sensor 114, if the electric tilt adjusting mechanism is mounted, the crossing angle $\alpha$ detected by the sensor such as a position sensor can be employed.

Further, even where the sensor for detecting the crossing angle $\alpha$ is not mounted, the torque fluctuation can be detected the learning function based on the motor current and steering angle, thereby executing correction/limitation of the motor current value.

**Claims**

1. An electric power steering apparatus, comprising: a steering mechanism (SM) having
a universal joint (4, 6) in a torque transmitting system and steering a steered wheel (W);
a steering torque detecting unit (14) that detects steering torque (T) supplied to the steering mechanism;
a current command value computing unit (24) that computes a current command value (Iu*, Iv*, Iw*) on the basis of at least the steering torque (T) detected by the steering torque detecting unit (14);
an electric motor (12) that generates steering assistant torque to be supplied to the steering mechanism;
a motor control unit (25) that drives/controls the electric motor (12); and
a steering angle detecting unit (18) that detects steering angle ($\Theta$) in the steering

mechanism;

the electric power steering apparatus being **characterized by** means of

a torque fluctuation detecting unit (43) that detects a torque fluctuation due to crossing angle (α) in the universal joint (4, 6) on the basis of the steering angle (Θ) detected by the steering angle detecting unit (18) and any one of the steering torque (T) detected by the steering torque detecting unit (14), the current command value (It) and self-aligning torque (SAT); and

a current command value correcting unit (44) that corrects the current command value (It) on the basis of the torque fluctuation detected by the torque fluctuation detecting unit (43) and the steering angle (Θ) detected by the steering angle detecting unit (18).

2. The electric power steering apparatus according to claim 1, wherein the current command correcting unit (44) computes a current command correction value (Ia) on the basis of the torque fluctuation detected by the torque fluctuation detecting unit (43) and the steering angle (Θ) detected by the steering angle detecting unit (18).

3. The electric power steering apparatus according to claim 1, wherein the current command correcting unit (44) limits the current command value on the basis of the torque fluctuation detected by the torque fluctuation detecting unit (43) and the steering angle (Θ) detected by the steering angle detecting unit (18) so that maximum torque due to the torque fluctuation is not larger than permissible maximum torque in the torque transmitting system of the steering mechanism.

4. The electric power steering apparatus according to claim 1, wherein the torque fluctuation detecting unit (43) detects amplitude (A) and phase (B) of a torque fluctuation within a predetermined range of the steering angle (Θ) and the current command value correcting unit (44) computes the current command correction value (Ia) on the basis of the steering angle (Θ) and the amplitude (A) and phase (B) of the torque changing rate.

5. The electric power steering apparatus according to claim 2, wherein the current command value correcting unit (44) adds the current command correction value (Ia) computed to the current command value (Itc).

6. The electric power steering apparatus according to claim 3, wherein if the torque changing point for the steering angle is known in advance, the torque fluctuation detecting unit (43) detects the direction of the torque fluctuation and the current command correcting unit computes the current command limited value on the basis of the direction of the torque fluctuation and the steering angle.

**Patentansprüche**

1. Elektrische Servolenkvorrichtung, die umfasst:

einen Lenkmechanismus (SM), der ein Kreuzgelenk (4, 6) in einem Drehmomentübertragungssystem aufweist und ein gelenktes Rad (W) lenkt;

eine Lenkmoment-Erfassungseinheit (14), die Lenkmoment (T) erfasst, das dem Lenkmechanismus zugeführt wird;

eine Strombefehlswert-Berechnungseinheit (24), die einen Strombefehlswert (Iu*, Iv*, Iw*) wenigstens auf Basis des durch die Lenkmoment-Erfassungseinheit (14) erfassten Lenkmoments (T) berechnet;

einen Elektromotor (12), der Lenkunterstützungs-Drehmoment erzeugt, das dem Lenkmechanismus zugeführt werden soll;

eine Motor-Steuereinheit (25), die den Elektromotor (12) antreibt/steuert; und

eine Lenkwinkel-Erfassungseinheit (18), die den Lenkwinkel (θ) in dem Lenkmechanismus erfasst; wobei die elektrische Servolenkvorrichtung **gekennzeichnet ist durch**:

eine Drehmomentfluktuations-Erfassungseinheit (43), die eine Drehmomentfluktuation aufgrund des Gelenkwinkels (α) in dem Kreuzgelenkt (4, 6) auf Basis des **durch** die Lenkwinkel-Erfassungseinheit (18) erfassten Lenkwinkels (θ) sowie des **durch** die Lenkmoment-Erfassungseinheit (14) erfassten Lenkmoments (T) des Strombefehlswertes (It) und eines Rückstellmoments (SAT) erfasst; und

eine Strombefehlswert-Korrektureinheit (44), die den Strombefehlswert (It) auf Basis der **durch** die Drehmomentfluktuations-Erfassungseinheit (43) erfassten Drehmomentfluktuation und des **durch** die Lenkwinkel-Erfassungseinheit (18) erfassten Lenkwinkels (θ) korrigiert.

2. Elektrische Servolenkvorrichtung nach Anspruch 1, wobei die Strombefehl-Korrektureinheit (44) einen Strombefehl-Korrekturwert (Ia) auf Basis der durch die Drehmomentfluktuations-Erfassungseinheit (43) erfassten Drehmomentfluktuation und des durch die Lenkwinkel-Erfassungseinheit (18) erfassten Lenkwinkels (θ) berechnet.

3. Elektrische Servolenkvorrichtung nach Anspruch 1, wobei die Strombefehl-Korrektureinheit (44) den Strombefehlswert auf Basis der durch die Drehmomentfluktuations-Erfassungseinheit (43) erfassten Drehmomentfluktuation sowie des durch die Lenkwinkel-Erfassungseinheit (18) erfassten Lenkwinkels (θ) so begrenzt, dass maximales Drehmoment aufgrund der Drehmomentfluktuation nicht größer ist als zulässiges maximales Drehmoment in dem Drehmoment-Übertragungssystem des Lenkmechanismus.

4. Elektrische Servolenkvorrichtung nach Anspruch 1, wobei die Drehmomentfluktuations-Erfassungseinheit (43) Amplitude (A) und Phase (B) einer Drehmomentfluktuation innerhalb eines vorgegebenen Bereiches des Lenkwinkels (θ) erfasst und die Strombefehlswert-Korrektureinheit (44) den Strombefehl-Korrekturwert (Ia) auf Basis des Lenkwinkels (θ) und der Amplitude (A) sowie der Phase (B) der Drehmoment-Änderungsrate berechnet.

5. Elektrische Servolenkvorrichtung nach Anspruch 2, wobei die Strombefehlswert-Korrektureinheit (44) den berechneten Strombefehl-Korrekturwert (Ia) zu dem Strombefehlswert (Itc) addiert.

6. Elektrische Servolenkvorrichtung nach Anspruch 3, wobei, wenn der Drehmoment-Änderungspunkt für den Lenkwinkel im Voraus bekannt ist, die Drehmomentfluktuations-Erfassungseinheit (43) die Richtung der Drehmomentfluktuation erfasst und die Strombefehl-Korrektureinheit den begrenzten Wert des Strombefehls auf Basis der Richtung der Drehmomentfluktuation und des Lenkwinkels berechnet.

**Revendications**

1. Dispositif de direction assistée électrique, comprenant : un mécanisme de direction (SM) ayant une articulation universelle à cardan (4, 6) dans un système de transmission de couple et orientant une roue directrice (W) ;
une unité (14) de détection de couple de direction qui détecte un couple (T) de direction délivré au mécanisme de direction ;
une unité (24) de calcul de valeur d'instruction d'intensité qui calcule une valeur (Iu*, Iv*, Iw*) d'instruction d'intensité sur la base d'au moins le couple (T) de direction détecté par l'unité (14) de détection de couple de direction ;
un moteur électrique (12) qui engendre un couple d'assistance de direction à fournir au mécanisme de direction ;
une unité (25) de commande de moteur qui attaque/commande le moteur électrique (12) ; et
une unité (18) de détection d'angle de direction qui détecte un angle (θ) de direction dans le mécanisme de direction ;
le dispositif de direction assistée électrique étant **caractérisé** au moyen :

d'une unité (43) de détection de fluctuation de couple qui détecte une fluctuation de couple due à un angle (α) de déviation dans l'articulation universelle à cardan (4, 6) sur la base de l'angle (θ) de direction détecté par l'unité (18) de détection d'angle de direction et de l'un quelconque du couple (T) de direction détecté par l'unité (14) de détection de couple de direction, de la valeur (It) d'instruction d'intensité et d'un couple (SAT) d'auto-alignement ; et
d'une unité (44) de correction de valeur d'instruction d'intensité qui corrige la valeur (It) d'instruction d'intensité sur la base de la fluctuation de couple détectée par l'unité (43) de détection de fluctuation de couple et de l'angle (θ) de direction détecté par l'unité (18) de détection d'angle de direction.

2. Dispositif de direction assistée électrique selon la revendication 1, dans lequel l'unité (44) de correction d'instruction d'intensité calcule une valeur (Ia) de correction d'instruction d'intensité sur la base de la fluctuation de couple détectée par l'unité (43) de détection de fluctuation de couple et de l'angle (θ) de direction détecté par l'unité (18) de détection d'angle de direction.

3. Dispositif de direction assistée électrique selon la revendication 1, dans lequel l'unité (44) de correction d'instruction d'intensité limite la valeur d'instruction d'intensité sur la base de la fluctuation de couple détectée par l'unité (43) de détection de fluctuation de couple et de l'angle (θ) de direction détecté par l'unité (18) de détection d'angle de direction de façon que le couple maximal dû à la fluctuation de couple ne soit pas plus grand que le couple maximal admissible dans le système de transmission de couple du mécanisme de direction.

4. Dispositif de direction assistée électrique selon la revendication 1, dans lequel l'unité (43) de détection de fluctuation de couple détecte l'amplitude (A) et la phase (B) d'une fluctuation de couple à l'intérieur d'une plage prédéterminée de l'angle (θ) de direction et dans lequel l'unité (44) de correction de valeur d'instruction d'intensité calcule la valeur (Ia) de correction d'instruction d'intensité sur la base de l'angle (θ) de direction et des amplitude (A) et phase (B) du taux de changement de couple.

5. Dispositif de direction assistée électrique selon la revendication 2, dans lequel l'unité (44) de correction de valeur d'instruction d'intensité ajoute la valeur calculée (Ia) de correction d'instruction d'intensité à la valeur (Itc) d'instruction d'intensité.

6. Dispositif de direction assistée électrique selon la revendication 3, dans lequel, si le point de changement de couple pour l'angle de direction est connu d'avance, l'unité (43) de détection de fluctuation de couple détecte le sens de la fluctuation de couple et l'unité de correction d'instruction d'intensité calcule la valeur limitée d'instruction d'intensité sur la base du sens de la fluctuation de couple et de l'angle de direction.

# FIG. 1

# FIG. 2

EP 1 882 623 B1

# FIG. 3

# FIG. 4

STEERING ASSIST
TORQUE COMMAND
VALUE Ir

V LARGE

0  Ts1

STERRING
TOQRUE T

# FIG. 5

## FIG. 6A

## FIG. 6B

## FIG. 7

# FIG. 8

## FIG. 9

EP 1 882 623 B1

FIG. 10

FIG. 11

FIG. 12

STEERING TORQUE SENSOR 14

STEERING ANGLE SENSOR 18

23 TORQUE CHANGE DETECTION

42 43

AMPLITUDE/PHASE DETECTION PART

41a 41 41c

s · ÷

s 41b

dT/dθ

44
44c
A
Ia 44d
Ia +
+
44b
+
B +
44a

Ita

CURRENT COMMAND COMPUTATION PART 24

Iu*-Iw*

COMPENSATED CURRENT COMMAND VALUE Itc

## FIG. 13

EP 1 882 623 B1

## FIG. 14

RANGE OF STEERING ANGLE IN WHICH
OUTPUT IS INSUFFICIENT IN ORDER
TO CORRECT TORQUE CHANGE

MAXIMUM CURRENT
LIMITED VALUE

MOTOR CURRENT

RANGE OF STEERING IN WHICH THRUST
EXCEEDS MAXIMUM RACK THRUST IF THE CURRENT
REACHES MAXIMUM CURRENT OF THE SYSTEM

STEERING ANGLE

EP 1 882 623 B1

# FIG. 15

EP 1 882 623 B1

EP 1 882 623 B1

*FIG. 16* {

CHARACTERISTIC
WHEN α IS POSITIVE

CHARACTERISTIC
WHEN α IS NEGATIVE

STEERING ANGLE

## FIG. 17

START STEERING ASSISTANT CONTROL PROCESSING

READ DETECTED VALUES FROM VARIOUS SENSORS ⎯ S1

COMPUTE STEERING ASSISTANT COMMAND
VALUE It REFERRING TO CONTROL MAP ⎯ S2

DIFFERENTIATE MOTOR ROTATING ANGLE θ
TO COMPUTE MOTOR ANGULAR SPEED ω ⎯ S3

DIFFERENTIATE MOTOR ANGULAR SPEED ω
TO COMPUTE MOTOR ANGULAR ACCELERATION α ⎯ S4

COMPUTE CONVERGENCE COMPENSATED VALUE Ic   Ic = Kv · ω ⎯ S5

COMPUTE INERTIA COMPENSATED VALUE Ii ON
THE BASIS OF MOTOR ANGULAR ACCELERATION α ⎯ S6

COMPUTE SELF-ALIGNING TORQUE SAT ⎯ S7

COMPUTE COMPENSATED STEERING ASSISTANT COMMAND VALUE Itc
Itc = It + Ic + Ii + SAT ⎯ S8

Ita = Itc + Ia ⎯ S9

COMPUTE TARGET CURRENT Id*,Iq* BY d-q
AXIS COMMAND VALUE COMPUTING PROCESSING ⎯ S10

COMPUTE MOTOR CURRENT COMMAND VALUES Iu* TO Iw*
BY TWO-PHASE/THREE-PHASE CONVERSION PROCESSING ⎯ S11

SUBTRACT MOTOR CURRENTS Iu TO Iw FROM CURRENT
COMMAND VALUES Iu* TO Iw* TO CURRENT DIFFERENCES ΔIu TO ΔIw ⎯ S12

SUBJECTING CURRENT DIFFERENCES ΔIu TO ΔIw TO PI CONROL
PROCESSING TO COMPUTE VOLTAGE COMMAND VALUES Vu TO Vw ⎯ S13

EXECUTING PULS-WIDTH MODULATION PROCESSING ON THE BASIS OF
VOLTAGE COMMAND VALUES Vu TO Vw TO CREATE INVERTE GATE SIGNALS ⎯ S14

SUPPLY INVERTER GATE SIGNALS TO INVERTER 64 ⎯ S15

RETURN

# FIG. 18

```
        ( DETECT TORQUE CHANGE )
                    │
                    ▼
        ┌─────────────────────────┐
        │ INPUT STEERING TORQUE T │──── S21
        └─────────────────────────┘
                    │
                    ▼
        ┌─────────────────────────┐
        │ INPUT STEERING ANGLE θ  │──── S22
        └─────────────────────────┘
                    │
                    ▼
            ┌───────────────┐
            │ COMPUTE dT/dθ │──── S23
            └───────────────┘
                    │
                    ▼
    ┌───────────────────────────────┐
    │ DETECT TORQUE AMPLITUED/PHASE  │──── S24
    │      OF TORQUE CHANGE          │
    └───────────────────────────────┘
                    │
                    ▼
        ┌───────────────────┐
        │ CORRECT CURRENT   │──── S25
        │ COMMAND VALUE     │
        └───────────────────┘
                    │
                    ▼
            (     END     )
```

FIG. 19

**15: CONTROLLER**

18 STEERING ANGLE SENSOR

21 TORQUE COMMAND VALUE COMPUTATION PART

14 STEERING TORQUE SENSOR

16 VEHICLE SPEED SENSOR

23

43 TORQUE CHANGE DETECTION PART

44 CURRENT COMMAND VALUE CORRECTION PART

33 CONVERGECE COMPENSATION PART

34 INERTIA COMPENSATION PART

35 SAT DETECTION PART

31 ANGULAR SPEED COMPUTATION PART

32 ANGULAR ACCELERATION COMPUTATION PART

60 MOTOR CURRENT DETECTION PART

90 TERMINAL VOLTAGE DETECTION PART

25

61

62 PI CURRENT CONTROL PART

63 DUTY COMPUTATION PART

91 H BRIDGE CIRCUIT

12

37, 36, 38

## FIG. 20

```
                                    114                          110
                            ┌──────────────────┐              ↙
                            │  TILT ANGLE SIGNAL │
                            │ (CROSSING ANGLE α) │        118
              112           └──────────────────┘          ↘          120
                                      │
  ┌─────────┐  ┌─────────┐  ┌──────────────────┐  ┌─────────┐  ┌─────────┐
  │ MANUAL  │→ │ TORQUE  │→ │    ASSIST MAP     │→ │  RACK   │→ │  MOTOR  │
  │ INPUT   │  │ SENSOR  │  │ (COMPUTATION OF   │  │ THRUST  │  └─────────┘
  └─────────┘  └─────────┘  │  TORQUE CHANGE)   │  └─────────┘
                            └──────────────────┘
                                      ↑
                            ┌──────────────────┐
                            │ JOINT PHASE SIGNAL │
                            │ (ROTATING ANGLE θ  │
                            │ OF DRIVING SHAFT)  │
                            └──────────────────┘
                                      │
                                     116
```

EP 1 882 623 B1

## FIG. 21A

## FIG. 21B

# FIG. 22

126

128

TILT MOVABLE
ANGLE

## FIG. 23

## FIG. 24

EP 1 882 623 B1

FIG. 25

THRUST

STEERING ANGLE

1100

1102

EP 1 882 623 B1

EP 1 882 623 B1

FIG. 26

THRUST

1106

1112

1110

1108

STEERING ANGLE

1114

1104

44

## FIG. 27

MAXIMUM THRUST WHICH CAN
BE PRODUCED BY MOTOR

RACK THRUST

ABBREVIATION

ΔF

MANUAL INPUT

IN THE VICINITY
OF RACK END

LEFT STEERING
(NOT SHOWN)

0

STEERING
ANGLE

RIGHT
STEERING

IN THE VICINITY
OF RACK END

RACK THRUST
---- : BEFORE CONTROL (NON-CONSTANT SPEED)
—— : AFTER CONTROL

EP 1 882 623 B1

## FIG. 28

EP 1 882 623 B1

## FIG. 29

MAXIMUM THRUST WHICH CAN
BE PRODUCED BY MOTOR

ABBREVIATION

Fmax

RACK THRUST

MANUAL INPUT

LEFT STEERING
(NOT SHOWN)

0

STEERING
ANGLE

RIGHT
STEERING

IN VICINITY
OF RACK END

IN VICINITY
OF RACK END

RACK THRUST
----: BEFORE CONTROL (NON-CONSTANT SPEED)
——: AFTER CONTROL

EP 1 882 623 B1

## FIG. 30

MOTOR CURRENT

MAXIMUM MOTOR CURRENT
LIMITING VALUE

IL

I

STEERING ANGLE

## FIG. 31

Fmax

MAXIMUM THRUST WHICH CAN
BE PRODUCED BY MOTOR

ABBREVIATION

IN VICINITY
OF RACK END

RACK THRUST

MANUAL INPUT

LEFT STEERING
(NOT SHOWN)

0

STEERING
ANGLE

RIGHT
STEERING

IN VICINITY
OF RACK END

RACK THRUST
----- : CROSSING ANGLE OF 0 (CONSTANT SPEED)
——— : OTHER THAN CROSSING ANGLE OF 0 (NON-CONSTANT SPEED)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003205846 A